(19) Europäisches Patentamt
European Patent Office
Office européen des brevets

(11) **EP 3 925 845 B1**

(12) **EUROPEAN PATENT SPECIFICATION**

(45) Date of publication and mention
of the grant of the patent:
**11.10.2023   Bulletin 2023/41**

(21) Application number: **19914188.8**

(22) Date of filing: **07.02.2019**

(51) International Patent Classification (IPC):
**B60W 40/04** (2006.01)   **G06V 20/56** (2022.01)

(52) Cooperative Patent Classification (CPC):
**B60W 30/0956; B60W 40/04; B60W 50/0097;**
B60W 2050/0022; B60W 2050/0054;
B60W 2552/53; B60W 2554/4042;
B60W 2554/4044; B60W 2554/4045;
B60W 2554/80; B60W 2556/60

(86) International application number:
**PCT/IB2019/000177**

(87) International publication number:
**WO 2020/161512 (13.08.2020 Gazette 2020/33)**

(54) **OTHER VEHICLE ACTION PREDICTION METHOD AND OTHER VEHICLE ACTION PREDICTION DEVICE**

VERFAHREN ZUR VORHERSAGE DER AKTION EINES ANDEREN FAHRZEUGS UND
VORRICHTUNG ZUR VORHERSAGE DER AKTION EINES ANDEREN FAHRZEUGS

PROCÉDÉ DE PRÉDICTION D'ACTION D'UN AUTRE VÉHICULE ET DISPOSITIF DE PRÉDICTION
D'ACTION D'UN AUTRE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.12.2021   Bulletin 2021/51**

(73) Proprietor: **Renault s.a.s**
**92100 Boulogne Billancourt (FR)**

(72) Inventors:
• **TAKEI, Shoichi**
**Atsugi-shi, Kanagawa 243--0123 (JP)**
• **TANAKA, Shinya**
**Atsugi-shi, Kanagawa 243--0123 (JP)**

(74) Representative: **Grünecker Patent- und
Rechtsanwälte
PartG mbB
Leopoldstraße 4
80802 München (DE)**

(56) References cited:
**JP-A- 2005 346 371      JP-A- 2017 154 614
US-A1- 2018 043 890**

• **SCHLECHTRIEMEN JULIAN ET AL: "A lane
change detection approach using feature ranking
with maximized predictive power", 2014 IEEE
INTELLIGENT VEHICLES SYMPOSIUM
PROCEEDINGS, IEEE, [Online] 8 June 2014
(2014-06-08), pages 108-114, XP032620418, DOI:
10.1109/IVS.2014.6856491 [retrieved on
2014-07-15]**

• WISSING CHRISTIAN ET AL: "Lane Change Prediction by Combining Movement and Situation based Probabilities", IFAC-PAPERSONLINE, [Online] vol. 50, no. 1, 1 July 2017 (2017-07-01), pages 3554-3559, XP055798621, DE ISSN: 2405-8963, DOI: 10.1016/j.ifacol.2017.08.960 Retrieved from the Internet: URL:https://pdf.sciencedirectassets.com/31 3346/1-s2.0-S2405896317X00037/1-s2.0-S2405 896317314337/main.pdf?X-Amz-Security-Token =IQoJb3JpZ2luX2VjEHAaCXVzLWVhc3QtMSJH MEUCI QC/aa4Jfa7k0/FAKm+QKSiPQz/TZ00OrJBrZ1bP yh2 5hAIgZ2oSJIOrU8VwNlr7msa2bKabkmKf9zW4J PsFI 9yTHIEqvQMI2f//////////ARADGgwwNTkwMDM1N DY 4NjUiDAL+w> [retrieved on 2022-03-07]
• KIM JAEHWAN ET AL: "Collision Risk Assessment Algorithm via Lane-Based Probabilistic Motion Prediction of Surrounding Vehicles", IEEE TRANSACTIONS ON INTELLIGENT TRANSPORTATION SYSTEMS, IEEE, PISCATAWAY, NJ, USA, vol. 19, no. 9, 1 September 2018 (2018-09-01), pages 2965-2976, XP011690017, ISSN: 1524-9050, DOI: 10.1109/TITS.2017.2768318 [retrieved on 2018-09-07]

• LIU PENG ET AL: "Trajectory prediction of a lane changing vehicle based on driver behavior estimation and classification", 17TH INTERNATIONAL IEEE CONFERENCE ON INTELLIGENT TRANSPORTATION SYSTEMS (ITSC), IEEE, [Online] 8 October 2014 (2014-10-08), pages 942-947, XP032685771, DOI: 10.1109/ITSC.2014.6957810 [retrieved on 2014-11-14]

# EP 3 925 845 B1

**Description**

TECHNICAL FIELD

The present invention relates to a motion prediction method of other vehicle and a motion prediction apparatus of other vehicle.

BACKGROUND ART

Since some time ago, an apparatus has been known that predicts an interruption by a second vehicle, which is running in an adjacent lane adjacent to an own driving lane in which an own vehicle is running, into the own driving lane and controls a vehicle speed of the own vehicle (refer to Patent Literature 1). The apparatus disclosed in the Patent Literature 1 computes an angle formed by a moving vector of the second vehicle with respect to a directional vector of a white line painted on a road surface and, if the angle exceeds a predetermined threshold angle, determines an interruption by the second vehicle into the own driving lane.

Patent Literature 2 describes a control system and method for determining the likelihood of a lane change by another vehicle preceding a host vehicle. The likelihood is computed by combining a movement-based likelihood and a traffic situation-based likelihood of a lane change. In particular, a lateral movement of the other vehicle is taken into account. If an overall likelihood exceeds a predetermined threshold value, a warning signal is issued.

A detection method for lane change intentions of traffic participants is further described in the article by Julian Schlechtriemen et al., "A Lane Change Detection Approach using Feature Ranking with Maximized Predictive Power", 2014 IEEE Intelligent Vehicles Symposium (IV), June 8-11, 2014, Dearborn, Michigan, USA, Proceedings pages 108-114. For detecting possible lane change manoeuvers, a plurality of features including speed, distances relative to the left and right lane markings and street curvature, are taken into account.

CITATION LIST

PATENT LITERATURE

Patent Literature 1: Japanese Unexamined Patent Application Publication No. 2001-199260
Patent Literature 2: US Patent Application Publication US 2018/043890 A1

SUMMARY OF INVENTION

Problems to be Solved by Invention

However, the width of a lane in which the own vehicle drives is not constant and differs road by road and the above-mentioned Patent Literature 1 does not put this into consideration. If the lane width differs, a vehicle behavior of the second vehicle will differ when a vehicle conducts a course change, to cause a possibility of causing an erroneous determination or a determination delay.

The present invention has been made in consideration of the above-mentioned problems and an object thereof is to provide a motion prediction method of other vehicle and an apparatus for motion prediction of other vehicle for suppressing an erroneous motion prediction of other vehicle or a prediction delay.

Means to Solve Problems

This is achieved by the features of the independent claims.

EFFECTS OF INVENTION

According to the present invention, it is possible to suppress erroneously predicting a movement of the second vehicle or delaying a prediction.

BRIEF DESCRIPTION OF DRAWINGS

3

Figure 1 is a block diagram illustrating a configuration of a motion prediction apparatus of other vehicle according to the first embodiment and a comparative example not claimed.

Figure 2 is a flowchart illustrating a first operation example of the motion prediction apparatus of other vehicle of Fig. 1 according to the motion prediction method of other vehicle related to the first embodiment.

Figure 3 is a flowchart illustrating a first operation example of the motion prediction apparatus of other vehicle of Fig. 1 according to the motion prediction method of other vehicle related to the comparative example.

Figure 4A is a top view illustrating an example of driving scenes in which a driving assist device related to the first embodiment and the comparative example effectively functions when a lane width is narrow.

Figure 4B is a top view illustrating an example of driving scenes in which the driving assist device related to the first embodiment and the comparative example effectively functions when a lane width is wide.

Figure 5A is a top view illustrating an example of proximity degrees (inter-vehicle distance 37) of a second vehicle 12 with respect to a first preceding vehicle 13a running in front of the second vehicle 12 when a lane width is narrow.

Figure 5B is a top view illustrating an example of proximity degrees (inter-vehicle distance 37) of the second vehicle 12 with respect to the first preceding vehicle 13a running in front of the second vehicle 12 when a lane width is wide.

Figure 5C is a top view illustrating an example of proximity degrees (inter-vehicle distance 37) when a first preceding vehicle 13b is large.

Figure 6A is a top view illustrating a first inter-vehicle distance 38a between the second vehicle 12 and the own vehicle 11 when the first inter-vehicle distance 38a is short.

Figure 6B is a top view illustrating a first inter-vehicle distance 38b between the second vehicle 12 and the own vehicle 11 when the first inter-vehicle distance 38b is long.

Figure 7A is a top view illustrating a second inter-vehicle distance 39a between the own vehicle 11 and a second preceding vehicle 14 running in front of the own vehicle 11 when a lane width is narrow.

Figure 7B is a top view illustrating the second inter-vehicle distance 39a between the own vehicle 11 and the second preceding vehicle 14 running in front of the own vehicle 11 when a lane width is wide and the second inter-vehicle distance 39a is short.

Figure 7C is a top view illustrating a second inter-vehicle distance 39b between the own vehicle 11 and the second preceding vehicle 14 when a lane width is wide and the second inter-vehicle distance 39b is long.

Figure 8 is a table illustrating an example of tables indicating relationships among a second proximity quantity, an angle θ, and a lane change probability.

MODE OF IMPLEMENTING INVENTION

With reference to the drawings, the embodiments will be explained in detail.

(First Embodiment)

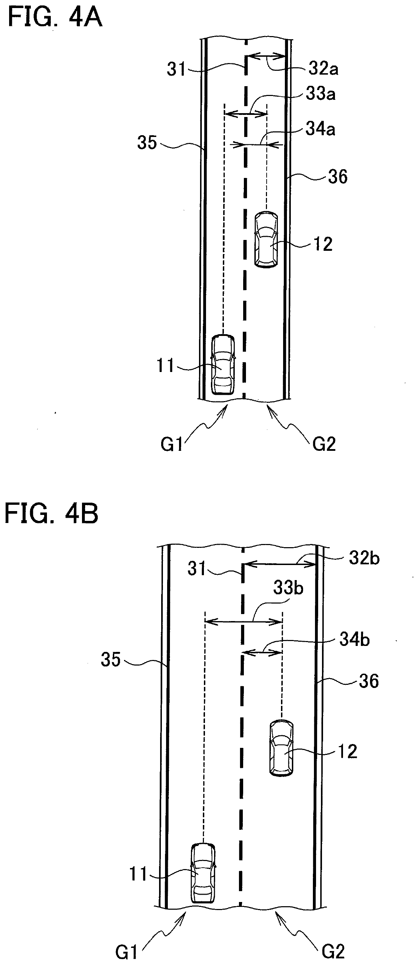

The motion prediction apparatus of other vehicle and the motion prediction method of other vehicle according to the first embodiment effectively function in, for example, driving scenes such as those illustrated in Figs. 4A and 4B. Figure 4A illustrates, on a one-way road formed of two lanes (G1, G2), a driving scene in which an own vehicle 11 is running in the left lane (own lane) G1 and a second vehicle 12 is running in the right lane (adjacent lane) G2 that is a lane adjacent to the own lane. The second vehicle 12 is running in diagonal front of the own vehicle 11. On the other hand, Fig. 4B differs from Fig. 4A in that Fig. 4B is a one-way road formed of two lanes (G1, G2) whose width of a lane (hereunder called the "lane width") is wider than that of the two lanes (G1, G2) of Fig. 4A. The other parts of the driving scene of Fig. 4B are the same as those of the driving scene of Fig. 4A.

In the driving scenes of Figs. 4A and 4B, the second vehicle 12 may be running by any one of automated driving and manual driving. The "automated driving" is a driving mode that a predetermined vehicle drive control device actively conducts a part or the whole of recognition, decision, and operation related to vehicle driving. Also, the "manual driving" is a driving mode that a driver, i.e., an occupant (human) of the second vehicle 12 conducts the vehicle driving.

The first embodiment computes a lane change probability according to a behavior of the second vehicle 12 and, with use of the lane change probability and a threshold value, predicts a lane change to be conducted by the second vehicle 12. In other words, with use of the lane change probability and threshold value, a determination is made whether or not the second vehicle 12 conducts a lane change. The "lane change probability" indicates a probability that the second vehicle 12 may conduct a lane change in front of the own vehicle 12 from the adjacent lane G2 to the own lane G1. The "lane change" is an example of movements of the second vehicle 12.

As illustrated in Figs. 4A and 4B, if the lane width (32a, 32b) of the adjacent lane G2 differs, there will be a difference in the behavior of the second vehicle 12 at the time of conducting a lane change. For example, at the time of conducting a lane change, the attitude (including a running direction, an axle direction, and a yaw angle), moving direction, moving distance (proximity quantity) in a vehicle width direction, and driving path of the second vehicle 12 change depending on the lane width (32a, 32b) of the adjacent lane G2. Accordingly, the first embodiment obtains information indicating the lane width (32a, 32b) of the adjacent lane G2 and, according to the lane width (32a, 32b), corrects at least one of the lane change probability and threshold value. Thereafter, the first embodiment compares the after-correction lane change probability with the before-correction threshold value, or compares the before-correction lane change probability with the after-correction threshold value, or compares the after-correction lane change probability with the after-correction threshold value, and thereby predicts a lane change to be conducted by the second vehicle 12. Taking the lane width (32a, 32b) of the adjacent lane G2 into consideration in predicting a lane change makes it possible to suppress an erroneous lane change prediction or a prediction delay. Which of the lane change probability and threshold value is corrected can be chosen by a user (for example, the driver of the own vehicle 11).

Hereunder, the motion prediction method of other vehicle and the motion prediction apparatus of other vehicle according to the first embodiment will be explained in detail. By the way, driving scenes such as those illustrated in Figs. 4A and 4B are examples of driving scenes in which the motion prediction method of other vehicle and the motion prediction apparatus of other vehicle according to the first embodiment effectively function and are not intended to limit scopes to which the motion prediction method of other vehicle and the motion prediction apparatus of other vehicle according to the first embodiment are applicable.

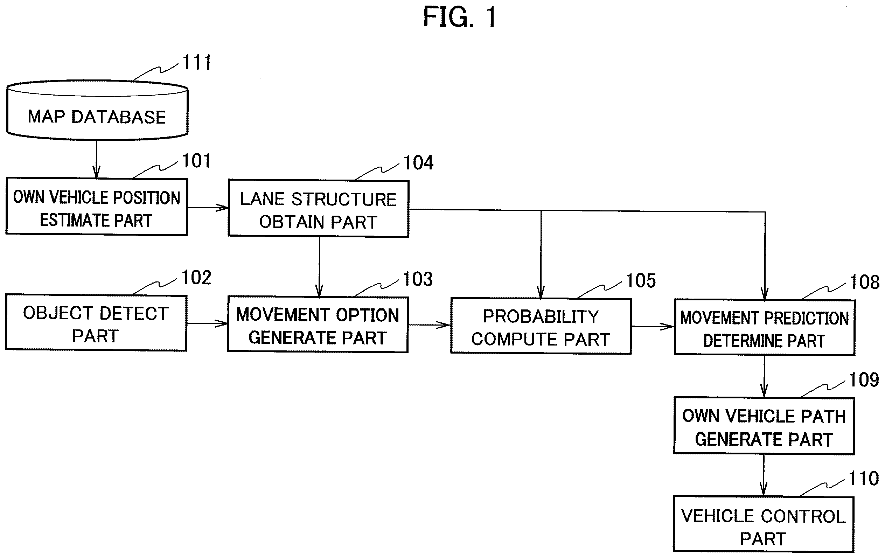

With reference to Fig. 1, a configuration of the motion prediction apparatus of other vehicle according to the first embodiment will be explained. The motion prediction apparatus of other vehicle has a control unit. The control unit predicts that, based on a behavior of the second vehicle 12 running in the adjacent lane G2, the second vehicle 12 may conduct a lane change in front of the own vehicle 11 from the adjacent lane G2 to the own lane G1. The control unit has an object detect part 102, an own vehicle position, estimate part 101, a lane structure obtain part 104, and a microcomputer.

The object detect part 102 is mounted on the own vehicle 11 and includes a plurality of different kinds of object detect sensors such as a laser radar, a millimeter-wave radar, a camera, a LiDAR (Light Detection and Ranging), and the like to detect objects around the own vehicle 11. The object detect part 102 uses the plurality of object detect sensors and detects objects around the own vehicle 11. The object detect part 102 detects the second vehicle 12 such as a two-wheel vehicle, a light vehicle such as a bicycle, a moving object such as a pedestrian, and a motionless object such as a parked vehicle. For example, it detects, with respect to the own vehicle 11, the position, attitude, moving direction, size, speed, acceleration, deceleration, yaw rate of a moving object or motionless object. The position, attitude, moving direction, size, speed, acceleration, deceleration, and yaw rate of an object are collectively referred to as the "behavior" of the object. Among the objects, the second vehicle 12 is a lane change determination object and whose behavior corresponds to a "state quantity" used to compute a lane change probability.

The object detect part 102 consolidates a plurality of detection results obtained from the plurality of object detect sensors and outputs one detection result for each object. More precisely, from behaviors of an object obtained from the respective object detect sensors, it computes, taking the error characteristics and the like of the respective object detect sensors into consideration, a most reasonable and least erroneous behavior of the object. In more detail, it uses a known sensor fusion technique to generally evaluate the detection results obtained from the plural kinds of sensors and obtains a more correct detection result.

The object detect part 102 tracks the detected object. More precisely, from the consolidated detection result and from behaviors of the object outputted at different times, verifies (corresponds) the sameness of the object between the different times, and based on the correspondence, predicts a behavior of the object. By the way, the behaviors of the object outputted at different times are stored in a memory in the microcomputer and are used for a movement prediction of the second vehicle 12 to be explained later.

The object detect part 102 outputs, as a detection result, a behavior of a two-dimensional object with, for example, a top view of the own vehicle 11 seen from the air above.

The behavior of the second vehicle 12 is expressed with any one of or a combination of two or more of the position including an absolute position and a relative position, attitude, moving direction, speed, acceleration, and drive path of the second vehicle 12. By the way, the drive path of the second vehicle 12 indicates a time series of positions of the second vehicle 12. For example, when the behavior of the second vehicle 12 is expressed with a combination of the drive path and speed, the behavior of the second vehicle 12 includes a profile of positions of the second vehicle 12 at different times and a profile of speeds of the second vehicle at the respective positions.

Alternatively, the behavior of the second vehicle 12 can be expressed with one or a combination of two or more of an angle formed by the attitude or moving direction of the second vehicle 12 with respect to a lane direction of the adjacent lane (right lane G2) or of the own lane (left lane G1), a lane width directional position of the second vehicle 12 in the adjacent lane, a speed of the second vehicle 12, an acceleration of the second vehicle 12, and a deceleration of the second vehicle 12.

The own vehicle position estimate part 101 has a position detect sensor such as a receiver to receive a GPS (Global Positioning System) signal, to measure the position (absolute position) and attitude (absolute attitude) of the own vehicle 11 on terrestrial coordinates. Further, the own vehicle position estimate part 101 has a computation processing circuit to carry out odometry and dead reckoning. More precisely, the own vehicle position estimate part 101 employs a wheel velocity sensor for detecting the wheel velocity of each wheel of the own vehicle 11, a steering angle sensor for detecting the steering angle of a steering wheel, and computation processing circuits, to measure the relative position, relative attitude, and speed of the own vehicle 11 with respect to a predetermined reference point. Information indicating the absolute position, absolute attitude, relative position, and relative attitude of the own vehicle 11 is called "information indicating the position and attitude of the own vehicle 11". The own vehicle position estimate part 101 is able to detect, from the information indicating the position and attitude of the own vehicle 11, the position and attitude of the own vehicle 11 on a map. The map is provided by map data stored in advance in a map database 111.

The lane structure obtain part 104 obtains information indicating the structure of a road including the left lane G1 and right lane G2 and the structure of each lane (G1, G2) forming the road. Naturally, if no object for a lane change determination is specified, it is possible to obtain, without particularly specifying as a lane, information concerning lanes adjacent to each side of the left lane G1. For example, the motion prediction apparatus of other vehicle may have the map database 111. Map data stored in the map database 111 contains data indicating the structure of the road including the own lane G1 and right lane G2 and the structure of each lane forming the road. The lane structure obtain part 104 accesses the map database 111 and is able to obtain the information (map data) indicating the road structure and lane structure. The lane structure obtain part 104 may obtain not only the map data but also information (traffic rules information) indicating traffic rules related to roads around the own vehicle 11. The map database 111 stores traffic rules information linked to road structures and lane structures. By the way, the information indicating a lane structure obtained by the lane structure obtain part 104 contains information indicating the lane width of each lane (G1, G2). The map database 111 may store information indicating the lane width of each lane (G1, G2). The information obtained by the lane structure obtain part 104 is temporarily stored in the memory of the microcomputer to be explained later.

By the way, the map database 111 may be installed in the own vehicle 11 or may not be installed therein. If not installed, the lane structure obtain part 104 may obtain the map data and traffic rules information from the outside of the vehicle, for example, from Intelligent Transport System (ITS) or Universal Traffic Management System (UTMS) through vehicle-to-vehicle and vehicle-to-road communications or mobile telecommunications such as 3G and LTE.

Also, the lane structure obtain part 104 may employ the camera of the object detect part 102 to obtain an image around the own vehicle 11 and recognize, from the image, road-painted lane markings and road signs indicating road traffic regulations and instructions. The lane structure obtain part 104 is able to obtain, from the recognized lane markings, a road structure, a lane structure, and traffic rules information. The lane markings painted on a road include a lane boundary line 31 to separate the adjacent lane (right lane G2) from the own lane (left lane G1), a lane marking 35 (including a road outside line) to separate the left lane G1 from a road shoulder or roadside strip adjacent to the left lane G1, and a lane marking 36 (including a road outside line) to separate the right lane G2 from a road shoulder or roadside strip adjacent to the right lane G2. Namely, the lane structure obtain part 104 may obtain, from the lane boundary line 31 and lane marking 35, information indicating a lane width of the left lane G1 and obtain, from the lane boundary line 31 and lane marking 36, information indicating a lane width of the right lane G2.

The microcomputer determines, according to the detected result from the object detect part 102, the estimated result from the own vehicle position estimate part 101, and the obtained information from the lane structure obtain part 104, whether or not the second vehicle 12 conducts a lane change.

The microcomputer is a general microcomputer having a CPU (Central Processing Unit), memories such as RAMs and ROMs, and an input/output part. The microcomputer is installed with a computer program (a program of motion prediction of other vehicle) to make it function as a part of the motion prediction apparatus of other vehicle. By executing the computer program, the microcomputer functions as a plurality of information processing circuits (103, 105, 108) of the motion prediction apparatus of other vehicle. Here, as an example, the plurality of information processing circuits (103, 105, 108) of the motion prediction apparatus of other vehicle are realized by software. Naturally, it is possible to prepare exclusive-use hardware for executing information processes mentioned below, to constitute the information processing circuits (103, 105, 108). Also, the plurality of information processing circuits (103, 105, 108) may be formed from discrete hardware. Further, the information processing circuits (103, 105, 108) may be realized by electronic control units (ECUs) that are also used for other controlling purposes of the own vehicle 11. According to the embodiment, as an example, the microcomputer also realizes information processing circuits (109, 110) to execute automated driving of the own vehicle 11 according to a motion prediction of other vehicle result.

The microcomputer has, as the plurality of information processing circuits (103, 105, 108 to 110), a movement option generate part 103, a probability compute part 105, a movement prediction determine part 108, an own vehicle path generate part 109, and a vehicle control part 110.

The movement option generate part 103 predicts, according to the road structure and lane structure, movement options to be achieved in the near future by the second vehicle 12. The movement options predicted by the movement option generate part 103 include a lane change. The movement option generate part 103 predicts, according to the road structure and the structure of the lane (adjacent lane G2) to which the second vehicle 12 belongs, a movement intention how the second vehicle 12 runs next and computes a base path of the second vehicle according to the movement intention. The "movement option" is a higher concept including the movement intention and base path. The "base path" indicates not only a positional profile of the second vehicle at different times but also a speed profile of the second vehicle 12 at respective positions.

For example, the movement option generate part 103 predicts, as illustrated in Fig. 4A, a movement intention that the second vehicle 12 continues to run in the adjacent lane (right lane G2) and computes a base path running along the shape of the right lane G2. Further, the movement option generate part 103 predicts a movement intention that the second vehicle 12 conducts a lane change in front of the own vehicle 11 from the adjacent lane (right lane G2) to the own lane (left lane G1). Then, the movement option generate part 103 computes, according to the structure of the right lane G2 and the structure of the left lane G1, a base path along which the second vehicle conducts the lane change in front of the own vehicle 11 from the right lane G2 to the left lane G1.

In this embodiment, the "lane change" includes, as illustrated in Fig. 4A, a lane change to be conducted in a driving scene in which no train of vehicles is formed in the left lane G1 in front of the own vehicle 11, i.e., a so-called "normal lane change". The "lane change" also includes a so-called "interruption" that is made into a train of vehicles formed in front of the own vehicle 11 in the own lane G1. Here, the "interruption" is synonymous with a "cut in".

(About Probability Compute Part 105)

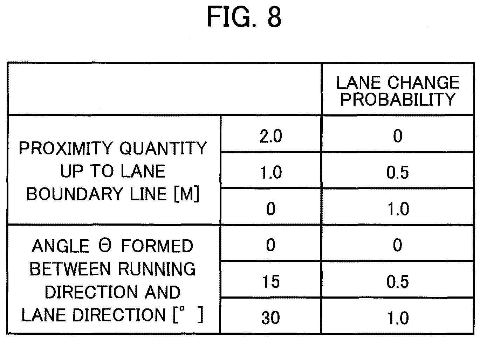

The probability compute part 105 computes a lane change probability according to a state quantity related to a lane change of the second vehicle 12 (hereunder simply the state quantity). The "lane change probability" indicates a probability of the second vehicle 12 conducting a lane change in front of the own vehicle 11 from the adjacent lane (right lane G2) to the own lane (left lane G1). For example, the probability compute part 105 computes the lane change probability according to an angle $\theta$ (an example of behaviors) formed by a moving direction of the second vehicle 12 and a lane direction of the right lane G2. The probability compute part 105 refers to a table illustrated in Fig. 8 and, from the angle $\theta$ formed between a running direction of the second vehicle 12 and the lane boundary line 31 (hereunder simply mentioned as the angle $\theta$), computes a lane change probability. If the angle $\theta$ is zero, the lane change probability is zero. If the angle $\theta$ is 15° or 30°, the lane change probability is 0.5 or 1.0. Namely, the larger the angle $\theta$, the larger the lane change probability. The lane direction of the right lane G2 corresponds to the running direction of a vehicle running along the right lane G2. Instead of the lane direction, it is possible to use a direction of the lane boundary line 31 separating the left lane G1 from the right lane G2. As the angle $\theta$ increases over a predetermined reference value, the moving direction of the second vehicle 12 inclines more toward the left lane G1. Accordingly, the probability compute part 105 is able to compute a higher lane change probability as the angle $\theta$ becomes larger. By the way, the probability compute part 105 may compute a lane change probability with use of, as a state quantity of the second vehicle 12, not only the angle $\theta$ but also an attitude (a yaw angle with respect to the right lane G2) of the second vehicle 12 or a behavior of the second vehicle 12 such as a moving direction of the second vehicle 12 based on, for example, the own vehicle instead of the right lane G2.

Also, for example, the state quantity may be a quantity expressing a proximity degree of the second vehicle 12 to the own vehicle 11 (hereunder simply the proximity quantity), i.e., a first proximity quantity or second proximity quantity to be explained later. The "first proximity quantity" indicates a vehicle width directional distance (33a, 33b) from a center of the own vehicle 11 to a center of the second vehicle 12. Naturally, the "first proximity quantity" may be a vehicle width directional distance from a right side face of the own vehicle 11 to a left side face of the second vehicle 12. The "second proximity quantity" indicates a vehicle width directional distance (34a, 34b) from the lane boundary line 31 to the center of the second vehicle 12. Naturally, the "second proximity quantity" may be a vehicle width directional distance from the lane boundary line 31 to the left side face of the second vehicle 12.

For example, when computing a lane change probability with use of the second proximity quantity, the probability compute part 105 may refer to the table of Fig. 8. If the second proximity quantity is 2.0 [m], the lane change probability is zero. If the second proximity quantity is 1.0 [m] or zero [m], the lane change probability is 0.5 or 1.0. Namely, the probability compute part 105 computes a higher lane change probability as the second proximity quantity becomes smaller. For example, it is possible to beforehand prepare, also for the first proximity quantity, a table similar to that of Fig. 8 and beforehand store it in the memory of the microcomputer.

The data illustrated in the table of Fig. 8 is stored in the memory of the microcomputer in advance.

The probability compute part 105 corrects the lane change probability according to the lane width (32a, 32b) of the adjacent lane (right lane G2). More precisely, the probability compute part 105 changes, based on the lane width (32a, 32b), a weight applied to a lane change probability computed according to a state quantity (including the above-mentioned "behavior" and "proximity quantity") used to compute the lane change probability. For example, an angle $\theta$ in the case of the narrow lane width (32a) illustrated in Fig. 4A is compared with an angle $\theta$ in the case of the wide lane width (32b) illustrated in Fig. 4B. In the case of the narrow lane width (32a), it is presumed that the second vehicle 12 conducts a lane change at an angle $\theta$ smaller than that of the wide lane width (32b). Accordingly, in determining a lane change, a decision will be made that the second vehicle 12 conducts a lane change at a smaller angle $\theta$ as the lane width becomes narrower. Accordingly, the probability compute part 105 increases, as the lane width becomes smaller, the weight applied to the lane change probability computed according to the angle θ. Multiplying the lane change probability computed with use of the angle θ by the increased weight results in enhancing the angle θ on the computation of the lane change probability (increases an influence of the angle θ on the lane change probability). In this way, the probability compute part 105 changes, according to the lane width (32a, 32b), the weight applied to the lane change probability computed according to the angle θ that is an example of state quantities, thereby correcting the lane change probability computed with use of the angle θ. In other words, the probability compute part 105 is able to correct such that, with respect to the same angle θ, the lane change probability increases as the lane width (32b) becomes narrower. By the way, the above explanation is an example when the angle θ is used as a behavior. Even when an attitude of the second vehicle 12 or a moving direction of the second vehicle 12 is used as the behavior, the probability compute part 105 changes, according to the lane width (32a, 32b) similar to the case of the angle θ, the weight applied to the lane change probability computed according to the attitude of the second vehicle 12 or the moving direction of the second vehicle 12.

The probability compute part 105 changes, according to the lane width (32a, 32b), a weight applied to a lane change probability computed according to a proximity quantity (first proximity quantity, second proximity quantity) used to compute the lane change probability. For example, in the case of the narrow lane width (32a), the second vehicle 12 is able to determine a lane change at a proximity quantity smaller than that of the wide lane width (32b). Also, the lane width (32a, 32b) becomes narrower, a vehicle width directional distance for which the second vehicle 12 moves to conduct a lane change becomes shorter so that the lane change becomes easier to conduct. Accordingly, when making a lane change determination, it is determined that, as the lane width becomes narrower, the second vehicle 12 conducts the lane change with a smaller first proximity quantity or a smaller second proximity quantity. Namely, the probability compute part 105 increases, as the lane width becomes narrower, the weight applied to the lane change probability computed according to the proximity quantity (first proximity quantity, second proximity quantity). Due to the weight increase, multiplying the lane change probability computed with use of the state quantity (first proximity quantity, second proximity quantity) by the weight results in enhancing the first proximity quantity and second proximity quantity when computing the lane change probability (increasing an influence of the first proximity quantity and second proximity quantity on the lane change probability). In this way, changing the weight applied to the lane change probability computed according to the first proximity quantity or second proximity quantity realizes the correction of a lane change probability computed with use of the first proximity quantity or second proximity quantity.

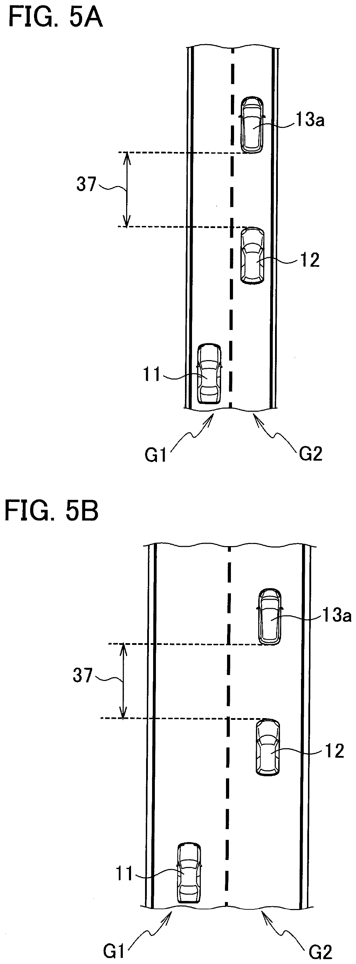

The state quantity may be an acceleration of the second vehicle 12 or a proximity degree of the second vehicle 12 with respect to a first preceding vehicle 13a running in front of the second vehicle 12 in the adjacent lane (right lane G2). The "proximity degree" indicates, as illustrated in Figs. 5A and 5B, a distance 37 from a front end of the second vehicle 12 to a rear end of the first preceding vehicle 13a in a running direction (direction along the lane) or an acceleration in an approaching direction to the first preceding vehicle 13a. The higher the acceleration, or the shorter the distance 37, i.e., the higher the proximity degree, the higher the lane change probability becomes. Accordingly, the probability computer part 105 computes a higher lane change probability as the acceleration or proximity degree of the second vehicle 12 becomes higher. For example, a table similar to that of Fig. 8 may be prepared in advance for the acceleration or proximity degree of the second vehicle 12 and stored in advance in the memory of the microcomputer.

The narrower the lane width (32a, 32b), the shorter the vehicle width directional distance for which the second vehicle 12 moves to conduct a lane change, i.e., the lane change becomes easier. Accordingly, in making a lane change determination, it is determined such that, as the lane width becomes narrower, the second vehicle 12 conducts a lane change at a smaller acceleration or distance 37. Due to this, the probability compute part 105 increases, as the lane width (32a, 32b) becomes narrower, a weight applied to a lane change probability computed according to the acceleration or distance 37. With this, compared with when the lane width (32a, 32b) is wide, it is possible, as the lane width becomes narrower, to enhance the acceleration or distance 37 (increase an influence of the acceleration or distance 37 on the lane change probability). Accordingly, the probability compute part 105 is able to make a correction, for the same acceleration or proximity degree, to increase the lane change probability as the lane width (32a, 32b) becomes narrower. As a result, even if the distance 37 is the same, the case of the narrower lane width (Fig. 5A) provides a higher lane change provability than the case of the wide lane width (Fig. 5B).

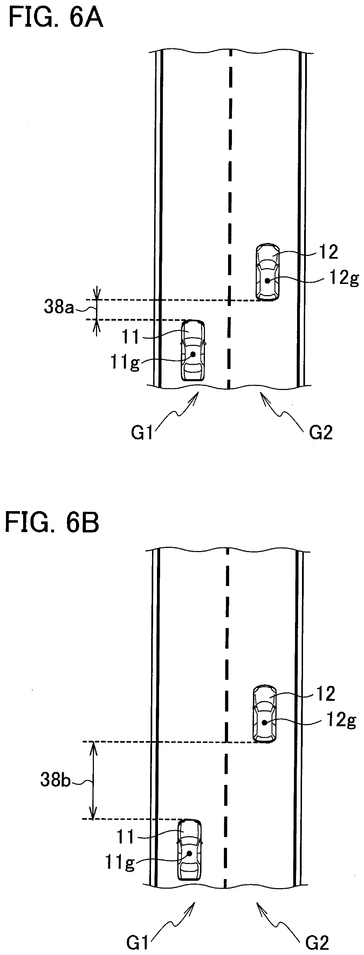

The state quantity may be, as illustrated in Figs. 6A and 6B, an inter-vehicle distance between the second vehicle 12 and the own vehicle 11 (hereunder called the "first inter-vehicle distance (38a, 38b)"). The first inter-vehicle distance (38a, 38b) is a running directional distance from a front end of the own vehicle 11 to a rear end of the second vehicle 12. Naturally, the first inter-vehicle distance (38a, 38b) may be a distance from a gravity center position 11g of the own vehicle 11 to a gravity center position 12g of the second vehicle 12. Contrary to the second proximity quantity in the table of Fig. 8, the probability compute part 105 computes a lower lane change probability as the first inter-vehicle distance (38a, 38b) becomes shorter. For example, a table similar to that of Fig. 8 may be prepared in advance for the first inter-vehicle distance (38a, 38b) and stored in advance in the memory of the microcomputer.

The wider the lane width (32a, 32b), the longer the vehicle width directional distance for which the second vehicle 12 moves to conduct a lane change, i.e., the lane change becomes more difficult. Also, in making a lane change determination, it is determined such that, as the lane width (32a, 32b) becomes narrower, the second vehicle 12 conducts a lane change at a shorter first inter-vehicle distance (38a, 38b). For this, the provability compute part 105 increases, as the lane width (32a, 32b) becomes narrower, a weight applied to a lane change probability computed according to the first inter-vehicle distance. With this, compared with the case of the wide lane width (32a, 32b), it is possible, as the lane width becomes narrower, to enhance the first inter-vehicle distance (increase an influence of the first inter-vehicle distance on the lane change provability). As a result, the probability compute part 105 is able to correct such that, with respect to the same first inter-vehicle distance, the lane change probability increases as the lane width (32a, 32b) becomes narrower.

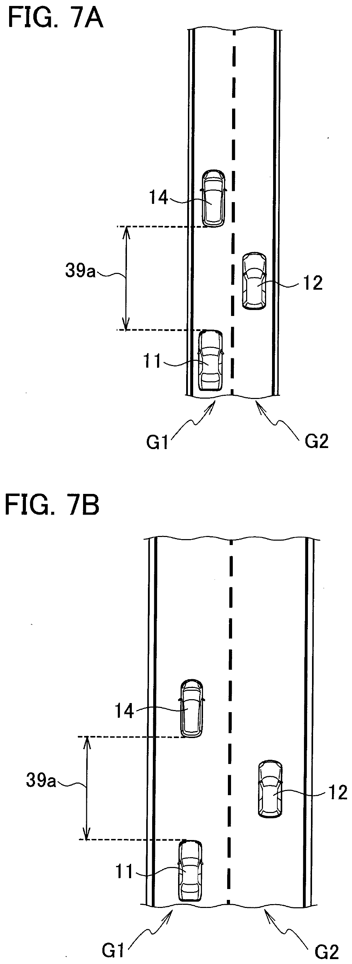

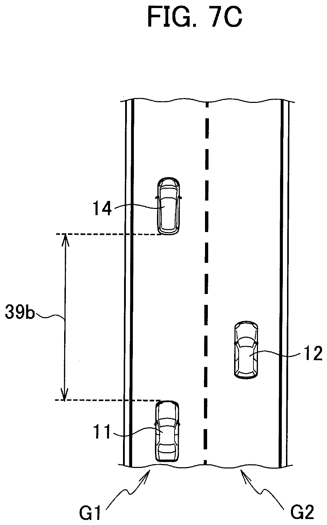

The state quantity may be, as illustrated in Figs. 7A to 7C, a distance between the own vehicle 11 and a second preceding vehicle 14 running in front of the own vehicle 11 in the own lane (left lane G1) (hereunder called the "second inter-vehicle distance (39a, 39b)"). The second inter-vehicle distance (39a, 39b) is a running directional distance from a front end of the own vehicle 11 to a rear end of the second preceding vehicle 14. The longer the second inter-vehicle distance (39a, 39b), the wider the space for allowing the second vehicle 12 to cut into between the own vehicle 11 and the second preceding vehicle 14, to make the second vehicle 12 conduct a lane change easier. On the other hand, narrower the second inter-vehicle distance (39a, 39b), the narrower the space for allowing the second vehicle 12 to cut into between the own vehicle 11 and the second preceding vehicle 14, to make the second vehicle 12 conduct a lane change harder. Accordingly, the probability compute part 105 computes a lower lane change probability as the second inter-vehicle distance (39a, 39b) becomes shorter. For example, a table similar to that of Fig. 8 is prepared in advance for the second inter-vehicle distance (39a, 39b) too and stored in advance in the memory of the microcomputer.

The wider the lane width (32a, 32b), the longer the vehicle width directional distance for which the second vehicle 12 moves to conduct a lane change, to make the lane change more difficult. Also, in making a lane change determination, it is determined such that, as the lane width (32a, 32b) becomes narrower, the second vehicle 12 conducts a lane change with a shorter second inter-vehicle distance (39a, 39b). Accordingly, the probability compute part 105 increases, as the lane width (32a, 32b) becomes narrower, a weight applied to a lane change probability computed according to the second inter-vehicle distance (39a, 39b). With this, compared with the case of the wide lane width (32a, 32b), the second inter-vehicle distance (39a, 39b) is enhanced as the lane width becomes narrower. As a result, the probability compute part 105 is able to correct such that, with respect to the same second inter-vehicle distance, the lane change probability increases as the lane width (32a, 32b) becomes narrower.

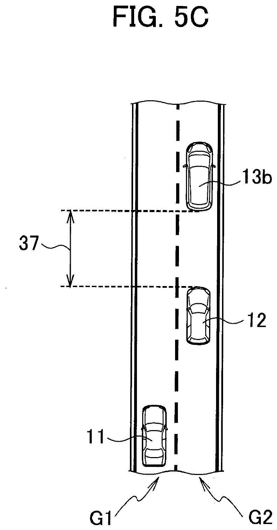

The state quantity may be, as illustrated in Figs. 5A and 5C, a difference between the size of the second vehicle 12 and the size of the first preceding vehicle (13a, 13b) running in front of the second vehicle 12 in the adjacent lane (right lane G2). The "size" of a vehicle is a concept including the height and width of the vehicle. For example, as illustrated in Fig. 5C, when the first preceding vehicle 13b is larger than the second vehicle 12, a front dead angle in the running direction of the second vehicle 12 formed by the first preceding vehicle 13b is wider compared with that of Fig. 5A. This makes it difficult for the second vehicle 12 to grasp a front situation in the running direction, thereby leading to a lower lane change probability. Accordingly, the probability compute part 105 computes a lower lane change probability as a value, for example, obtained by subtracting a vehicle height of the second vehicle 12 from a vehicle height of the first preceding vehicle 13b (vehicle height difference) becomes larger. For example, a table similar to that of Fig. 8 is prepared in advance for the vehicle height too and stored in advance in the memory of the microcomputer.

The narrower the lane width (32a, 32b), the harder the second vehicle 12 grasps the running directional front of the adjacent lane (right lane G2), to make a lane change more difficult to conduct. Accordingly, in making a lane change determination, it is determined such that, as the lane width (32a, 32b) becomes narrower, the second vehicle 12 conducts a lane change at a smaller vehicle height difference. Accordingly, the probability compute part 105 increases, as the lane width (32a, 32b) becomes narrower, a weight applied to a lane change probability computed according to a difference between the size of the second vehicle 12 and the size of the first preceding vehicle (13a, 13b). With this, compared with when the lane width (32a, 32b) is wide, it is possible, as the lane width becomes narrower, to enhance the vehicle height difference (increase an influence of the vehicle height difference on the lane change probability). As a result, the probability compute part 105 is able to correct such that, with respect to the same vehicle height difference, the lane change probability decreases as the lane width (32a, 32b) becomes narrower. By the way, the probability compute part 105 may increase a weight applied to the vehicle height difference (an example of state quantities) as the lane width (32a, 32b) becomes narrower.

The state quantity may be a relative speed of the second vehicle 12 with respect to the own vehicle 11. The larger the relative speed, the easier the second vehicle 12 conducts a lane change. On the other hand, the smaller the relative speed, the harder the second vehicle 12 conducts a lane change. Due to this, the probability compute part 105 computes, as the relative speed becomes smaller, a lower lane change probability. For example, a table similar to that of Fig. 8 is prepared in advance for the relative speed too and is stored in advance in the memory of the microcomputer.

The wider the lane width (32a, 32b), the longer the vehicle width directional distance for which the second vehicle 12 moves to conduct a lane change, to make the lane change more difficult to conduct. Due to this, in making a lane change determination, it is determined such that, as the lane width (32a, 32b) becomes wider, the second vehicle 12 conducts a lane change at a higher relative speed of the second vehicle 12 with respect to the own vehicle. For this, the probability compute part 105 increases, as the lane width (32a, 32b) becomes wider, a weight applied to the relative speed. With this, compared with when the lane width (32a, 32b) is narrow, it is possible, as the lane width becomes wider, to enhance the relative speed (increase an influence of the relative speed on the lane change probability). As a result, the probability compute part 105 is able to correct such that, with respect to the same relative speed, the lane change probability decreases as the lane width (32a, 32b) becomes wider.

The probability compute part 105 is able to compute a lane change probability according to a plurality of state quantities $(x, \theta)$ and weights $(\alpha, \beta)$ applied to lane change probabilities $(\rho(x), \rho(\theta))$ computed according to the state quantities $(x, \theta)$. Namely, the probability compute part 105 computes, for the plurality of state quantities $(x, \theta)$, the lane change probabilities $(\rho(x), \rho(\theta))$, respectively, and according to the lane width (32a, 32b), adjusts the weights $(\alpha, \beta)$ applied to the respective state quantities $(x, \theta)$. Thereafter, it is possible to combine a plurality of corrected lane change probabilities $(\alpha \cdot \rho(x), \beta \cdot \rho(\theta))$ and finally compute one lane change probability (P). For example, according to the expression (1), it is possible to compute one corrected lane change probability (P) from the plurality of corrected lane change probabilities $(\alpha \cdot \rho(x), \beta \cdot \rho(\theta))$. In the expression (1), N is the number of corrected lane change probabilities or the sum of weights. Also, L is a lane change probability according to a state quantity, for example, the above-mentioned acceleration, inter-vehicle distance, second vehicle size, or relative speed other than $(x, \theta)$. By the way, in connection with the lane change probability L, it is possible to correct it, similar to the lane change probabilities $(\rho(x), \rho(\theta))$, by multiplying it by a weight set according to the lane width. In addition, $\theta$ in the below-mentioned expression (1) means, as mentioned above, an angle formed by a moving direction of the second vehicle 12 and a lane direction of the right lane G2 and x means the above-mentioned first proximity quantity or second proximity quantity.

[Expression 1]

$$P = \frac{\alpha \cdot p(x) + \beta \cdot p(\theta) + \cdots}{N} \qquad (1)$$

(About Movement Prediction Determine Part 108)

The movement prediction determine part 108 uses the lane change probability and a preset threshold value and determines whether or not the second vehicle conducts a lane change. The movement prediction determine part 108 corrects the threshold value according to the lane width (32a, 32b) of the adjacent lane (right lane G2).

More precisely, the movement prediction determine part 108 determines, according to the below-mentioned three methods (first method to third method), whether or not the second vehicle 12 conducts a lane change. The three methods are alternatively selectable.

As the first method, the movement prediction determine part 108 is able to compare a lane change probability corrected by the probability compute part 105 (called the "after-correction lane change probability") with a before-correction threshold value. The "before-correction threshold value" is a threshold value before corrected by the movement prediction determine part 108. The movement prediction determine part 108 determines that, if the after-correction lane change probability is greater than the before-correction threshold value, the second vehicle 12 conducts a lane change. On the other hand, the movement prediction determine part 108 determines that, if the after-correction lane change probability is equal to or smaller than the before-correction threshold value, the second vehicle 12 conducts no lane change. When the first method is selected, the movement prediction determine part 108 is not required to correct the threshold value according to the lane width (32a, 32b) of the adjacent lane (right lane G2).

As the second method, the movement prediction determine part 108 is able to compare a lane change probability computed by the probability compute part 105 with a threshold value corrected by the movement prediction determine part 108 (called the "after-correction threshold value"). The lane change probability computed by the probability compute part 105 is a lane-change probability before correction by the probability compute part 105 (called the "before-correction lane change probability"). The movement prediction determine part 108 determines that, if the before-correction lane change probability is greater than the after-correction threshold value, the second vehicle 12 conducts a lane change. On the other hand, the movement prediction determine part 108 determines that, if the before-correction lane change probability is equal to or smaller than the after-correction threshold value, the second vehicle 12 conducts no lane change. When the second method is selected, the probability compute part 105 is not required to correct the lane change probability according to the lane width (32a, 32b) of the adjacent lane (right lane G2).

As the third method, the movement prediction determine part 108 is able to compare the after-correction lane change probability with the after-correction threshold value. The movement prediction determine part 108 determines that, if the after-correction lane change probability is greater than the after-correction threshold value, the second vehicle 12 conducts a lane change. On the other hand, the movement prediction determine part 108 determines that, if the after-correction lane change probability is equal to or smaller than the after-correction threshold value, the second vehicle 12 conducts no lane change.

In this way, the movement prediction determine part 108 compares one of the lane change probability and threshold value corrected according to the lane width (32a, 32b) with the other of the lane change probability and threshold value not corrected according to the lane width (32a, 32b). Alternatively, the movement prediction determine part 108 compares the lane change probability and threshold value both corrected according to the lane width (32a, 32b) with each other. The movement prediction determine part 108 determines, according to any one of these comparison results, whether or not the second vehicle 12 conducts a lane change.

The threshold value correction according to the lane width (32a, 32b) will be explained. The movement prediction determine part 108 beforehand sets one or a plurality of threshold values for each lane width (32a, 32b). For example, for each of the narrow lane width 32a and wide lane width 32b, one or a plurality of threshold values are set. By the way, the set threshold values are stored in the memory of the microcomputer. The movement prediction determine part 108 selects one or a plurality of threshold values corresponding to a lane width obtained by the lane structure obtain part 104. In this way, the movement prediction determine part 108 beforehand sets different threshold values for lane widths, respectively, and selects from among the threshold values a threshold value corresponding to an actual lane width, thereby achieving the threshold value correction. The movement prediction determine part 108 compares the selected threshold value (an example of the after-correction threshold value) with a lane change probability and predicts a lane change of the second vehicle 12.

"Setting a plurality of threshold values" is to set threshold values for state quantities, respectively, used to compute a lane change probability. For example, as explained with reference to the expression (1), in the case of using a plurality of state quantities $(x, \theta, ...)$ to compute a lane change probability, threshold values are set for the state quantities $(x, \theta, ...)$, respectively. The movement prediction determine part 108 compares, for each of the state quantities $(x, \theta, ...)$, a selected threshold value with a lane change probability $(p(x), \rho(\theta), ...)$ and determines whether or not the second vehicle 12 conducts a lane change.

"Setting a plurality of threshold values" is to set, for multistage-controlling the first inter-vehicle distance (38a, 38b) or the speed of the own vehicle 11, a plurality of threshold values for a state quantity used to compute a lane change probability or for the lane change probability. More precisely, a plurality of threshold values are beforehand prepared in a multistage manner. Then, the plurality of threshold values are compared with a lane change probability, to determine in a multistage manner whether or not the second vehicle 12 conducts a lane change. This realizes a multistage vehicle control of the own vehicle 11 for securing safety for the lane change of the second vehicle 12.

When correcting a threshold value according to the lane width (32a, 32b), the probability compute part 105 may suppose that the second vehicle 12 is positioned on the lane boundary line 31 and compute a lane change probability. The position of the second vehicle 12 that is an example of a state quantity used to compute a lane change probability is supposed to be a position on the lane boundary line 31. Taking the position of the second vehicle 12 into consideration, the computation of a lane change probability or the determination of a lane change can be stabilized.

The own vehicle path generate part 109 generates a path of the own vehicle 11 according to the movement (including the lane change) of the second vehicle 12 predicted by the movement prediction determine part 108. If the lane change of the second vehicle 12 to the own lane G1 has been predicted, it is possible to generate a path based on the lane change prediction of the second vehicle 12. Accordingly, it is possible to generate a smooth path of the own vehicle 11 that secures a sufficient inter-vehicle distance from the second vehicle 12 and prevents the movement of the second vehicle 12 from causing a rapid deceleration or rapid steering of the own vehicle 11. The "path of the own vehicle" indicates not only a positional profile of the own vehicle 11 at different times but also a speed profile of the own vehicle 11 at respective positions. The own vehicle path generate part 109 generates a path of the own vehicle 11 conforming to the lane change. Further, it is possible to generate a path of the own vehicle 11 to increase a relative distance of the second vehicle 12 with respect to the own vehicle 11. Also, if there is formed a train of vehicles in front of the own vehicle 11, the own vehicle path generate part 109 may compute a path of the own vehicle 11 that makes the own vehicle 11 decelerate to form an inter-vehicle space so that the second vehicle 12 may cut in the train of vehicles. This results in more safely controlling the own vehicle 11.

The vehicle control part 110 drives at least one of a steering actuator, an acceleration pedal actuator, and a brake pedal actuator according to an own position computed by the own vehicle position estimate part 101, so that the own vehicle 11 may run along the path generated by the own vehicle path generate part 109. By the way, the first embodiment describes a control example that controls the own vehicle 11 along a path. Instead, it is possible to control the own vehicle 11 without generating a path of the own vehicle 11. In this case, it is possible to achieve the control according to a relative distance with respect to the second vehicle 12 or an attitude angle difference between the second vehicle 12 and the own vehicle 11. If whether or not the second vehicle 12 conducts a lane change is determined in a multistage manner, the vehicle control part 110 is able to carry out a multistage vehicle control of the own vehicle 11 to secure safety with respect to a lane change of the second vehicle 12. Alternatively, the value itself of the lane change probability may be used to control an inter-vehicle distance between the own vehicle 11 and the second vehicle 12 and a vehicle speed of the own vehicle 11.

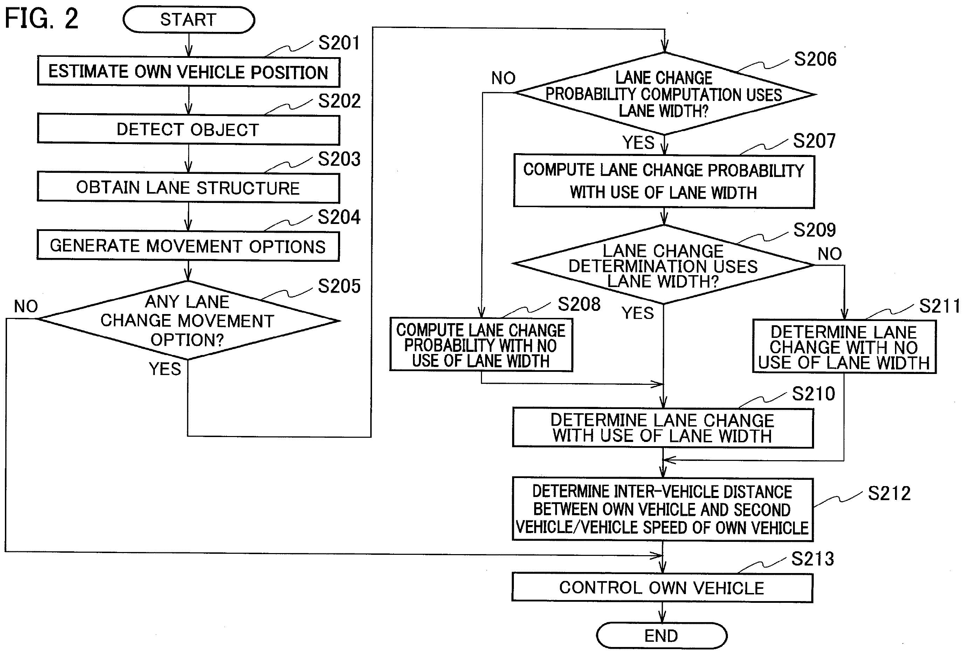

With reference to Fig. 2, as the motion prediction of other vehicle method according to the first embodiment, an operation example of the motion prediction of other vehicle apparatus of Fig. 1 will be explained. Figure 2 is repeatedly executed at predetermined intervals from when an ignition switch of the own vehicle 11 is turned ON (in the case of an electric car, a power source is turned ON) until when it is turned OFF. Also, the control flow of Fig. 2 is based on an assumption that the own vehicle 11 is run by automated driving.

First, in step S201, the own vehicle position estimate part 101 measures an own position (an absolute position and a relative position) of the own vehicle 11. Thereafter, the position and attitude of the own vehicle 11 on a map are detected. Advancing to step S202, the object detect part 102 obtains a behavior of the second vehicle 12. More precisely, the object detect part 102 employs an object detect sensor to detect the second vehicle 12 and tracks the second vehicle 12. As a detection result, for example, a behavior of the second vehicle 12 in a top view seen from the air above the own vehicle 11 is outputted.

Advancing to step S203, the lane structure obtain part 104 obtains information indicating the structure of a road around the own vehicle 11 and the structure of each lane (G1, G2) forming the road. In the road around the own vehicle 11, information indicating the structure of an adjacent lane (right lane G2) in which the second vehicle 12, i.e., a lane change determination object is running is at least obtained. The structure of the adjacent lane (right lane G2) includes a lane width of the adjacent lane (right lane G2). From map data or an analysis of an image around the own vehicle 11, the information indicating the road structure and lane structure is obtainable. Advancing to step S204, the movement option generate part 103 predicts, according to the road structure and lane structure, movement options to be carried out in the near future by the second vehicle 12. The movement options include a lane change.

Advancing to step S205, the motion prediction apparatus of other vehicle determines whether or not a lane change is included in the predicted movement options. If there is the lane change (YES in S205), it advances to step S206. On the other hand, if there is no lane change (NO in S205), it advances to step S213 in which the vehicle control part 110 executes a normal vehicle control without using a determination result by the motion prediction apparatus of other vehicle.

In the step S206, the motion prediction apparatus of other vehicle determines, according to a user selected state in connection with a lane change probability correction, whether or not a lane change probability must be corrected. If the user has selected to correct the lane change probability according to the lane width (32a, 32b) (YES in S206), it advances to step S207. On the other hand, if the user has selected not to correct the lane change probability according to the lane width (32a, 32b) (NO in S206), it advances to step S208.

In the step S208, the probability compute part 105 computes a lane change probability according to a state quantity. The state quantity is one or a combination of two or more of an attitude of the second vehicle 12, a moving direction thereof, an angle θ thereof, a first proximity quantity, a second proximity quantity, an acceleration of the second vehicle 12, a proximity degree of the second vehicle 12 with respect to the first preceding vehicle 13a, a first inter-vehicle distance (38a, 38b), a second inter-vehicle distance (39a, 39b), a size of the second vehicle 12 or first preceding vehicle (13a, 13b), and a relative speed of the second vehicle 12 with respect to the own vehicle 11. Thereafter, it advances to step S210.

In the step S207, the probability compute part 105 computes, similar to the step S208, a lane change probability according to a state quantity. Further, the probability compute part 105 corrects the lane change probability according to the lane width (32a, 32b) of the adjacent lane (right lane G2). More precisely, the probability compute part 105 changes, according to the lane width (32a, 32b), a weight applied to the state quantity used to compute the lane change probability, thereby correcting the lane change probability. Thereafter, it advances to step S209.

In the step S209, the motion prediction apparatus of other vehicle determines, according to a user selected state concerning a threshold value correction, whether or not a threshold value must be corrected. If correcting the threshold value according to the lane width (32a, 32b) has been selected by the user (YES in S209), it advances to step S210. On the other hand, if not correcting the threshold value according to the lane width (32a, 32b) has been selected by the user (NO in S209), it advances to step S211.

In the step S211, the movement prediction determine part 108 compares the lane change probability corrected in the step S207 (after-correction lane change probability) with a before-correction threshold value. If the after-correction lane change probability is greater than the before-correction threshold value, the movement prediction determine part 108 determines that the second vehicle 12 conducts a lane change. On the other hand, if the after-correction lane change probability is equal to or smaller than the before-correction threshold value, the movement prediction determine part 108 determines that the second vehicle 12 conducts no lane change. Thereafter, it advances to step S212.

In the step S210, the movement prediction determine part 108 first corrects the threshold value according to the lane width (32a, 32b) of the adjacent lane (right lane G2). Then, if the step S208 has been passed through, the movement prediction determine part 108 compares the lane change probability computed in the step S208 (before-correction lane change probability) with the corrected threshold value (after-correction threshold value). If the before-correction lane change probability is greater than the after-correction threshold value, the movement prediction determine part 108 determines that the second vehicle 12 conducts a lane change. On the other hand, if the before-correction lane change probability is equal to or smaller than the after-correction threshold value, the movement prediction determine part 108 determines that the second vehicle 12 conducts no lane change.

On the other hand, if the step S207 has been passed through, the movement prediction determine part 108 compares the lane change probability corrected in the step S207 (after-correction lane change probability) with the after-correction threshold value. If the after-correction lane change probability is greater than the after-correction threshold value, the movement prediction determine part 108 determines that the second vehicle 12 conducts a lane change. On the other hand, if the after-correction lane change probability is equal to or smaller than the after-correction threshold value, the movement prediction determine part 108 determines that the second vehicle 12 conducts no lane change. Thereafter, it advances to step S212.

In the step S212, the own vehicle path generate part 109 generates a path of the own vehicle 11 according to the movement of the second vehicle 12 predicted in the step S210 or S211. If the lane change of the second vehicle 12 to the own lane G1 has been predicted, the path is generated based on the lane change prediction of the second vehicle 12. As the path of the own vehicle 11, the own vehicle path generate part 109 determines a relative distance of the second vehicle 12 with respect to the own vehicle 11 and determines a locus and vehicle speed of the own vehicle 11 that are necessary to maintain the relative distance.

Advancing to step S213, the vehicle control part 110 drives various kinds of actuators according to the own position computed by the own vehicle position estimate part 101, so that the own vehicle 11 may run along the path generated in the step S212. The vehicle control part 110 may control the own vehicle 11 without generating the path of the own vehicle 11.

As explained above, according to the first embodiment, the below-mentioned functions and effects are obtained.

As illustrated in Figs. 4A and 4B, in an actual environment, a vehicle runs through locations with different road widths and lane widths. If the lane width differs, the movement of the second vehicle 12 conducting a lane change will differ. Due to this, the motion prediction apparatus of other vehicle corrects, according to the lane width (32a, 32b), at least one of the lane change probability and threshold value. The movement prediction determine part 108 compares one of the lane change probability and threshold value corrected according to the lane width with the other of the lane change probability and threshold value not corrected according to the lane width. Alternatively, the movement prediction determine part 108 compares the lane change probability and threshold value both corrected according to the lane width with each other. According to any one of the comparison results, the movement prediction determine part 108 determines whether or not the second vehicle 12 conducts a lane change. Predicting the lane change by taking the lane width (32a, 32b) of the adjacent lane G2 into consideration is able to suppress an erroneous lane change prediction or a prediction delay. Further, it suppresses a deceleration of the own vehicle 11 due to the erroneous prediction or a sudden deceleration of the own vehicle 11 due to the prediction delay.

The probability compute part 105 changes, according to the lane width, a weight applied to a lane change probability computed according to a state quantity, thereby correcting the lane change probability according to the lane width. Even on roads with different lane widths, it is possible to compute a lane change probability without receiving an influence of the lane widths.

The state quantity may be a position of the second vehicle 12, a first proximity quantity, i.e., an approaching quantity of the second vehicle 12 to the own vehicle 11, or a second proximity quantity, i.e., an approaching quantity of the second vehicle 12 to the lane boundary line 31. The probability compute part 105 increases, as the lane width becomes wider, a weight applied to the position of the second vehicle 12, first proximity quantity, and second proximity quantity. As the lane width becomes wider, it is possible, in determining a lane change, to attach importance to the position of the second vehicle 12, first proximity quantity, and second proximity quantity. Without receiving an influence of the lane width, a proper lane change probability can be computed.

The state quantity may be an attitude of the second vehicle 12, a moving direction of the second vehicle 12, or an angle $\theta$ formed by the moving direction of the second vehicle 12 and a lane direction of the right lane G2. The probability compute part 105 increases, as the lane width becomes narrower, a weight applied to the attitude, moving direction, or angle $\theta$. As the lane width becomes narrower, it is possible, in determining a lane change, to attach importance to the attitude, moving direction, or angle $\theta$. Without receiving an influence of the lane width, a proper lane change probability can be computed.

The state quantity may be an acceleration of the second vehicle 12 or a proximity degree of the second vehicle 12 with respect to the first preceding vehicle 13a. The probability compute part 105 increases, as the lane width (32a, 32b) becomes narrower, a weight applied to the acceleration or proximity degree. As the lane width becomes narrower, it is possible, in determining a lane change, to attach importance to the acceleration or proximity degree. Without receiving an influence of the lane width, a proper lane change probability can be computed.

The state quantity may be, as illustrated in Figs. 6A and 6B, the first inter-vehicle distance (38a, 38b). The probability compute part 105 increases, as the lane width (32a, 32b) becomes wider, a weight applied to the first inter-vehicle distance. As the lane width becomes wider, it is possible, in determining a lane change, to attach importance to the first inter-vehicle distance. Without receiving an influence of the lane width, a proper lane change probability can be computed.

The state quantity may be, as illustrated in Figs. 7A to 7C, the second inter-vehicle distance (39a, 39b). The probability compute part 105 increases, as the lane width (32a, 32b) becomes wider, a weight applied to the second inter-vehicle distance. As the lane width becomes wider, it is possible, in determining a lane change, to attach importance to the second inter-vehicle distance. Without receiving an influence of the lane width, a proper lane change probability can be computed.

The state quantity may be, as illustrated in Figs. 5A and 5C, a size of the second vehicle 12, a size of the first preceding vehicle (13a, 13b), or a vehicle height difference. The probability compute part 105 increases, as the lane width (32a, 32b) becomes narrower, a weight applied to the size of the second vehicle 12, the size of the first preceding vehicle (13a, 13b), or the vehicle height difference. As the lane width becomes narrower, it is possible, in determining a lane change, to attach importance to the size of the second vehicle 12, the size of the first preceding vehicle (13a, 13b), or the vehicle height difference. Without receiving an influence of the lane width, a proper lane change probability can be computed.

The state quantity may be a relative speed of the second vehicle 12 with respect to the own vehicle 11. The probability compute part 105 increases, as the lane width (32a, 32b) becomes wider, a weight applied to the relative speed. As the lane width becomes wider, it is possible, in determining a lane change, to attach importance to the relative speed. Without receiving an influence of the lane width, a proper lane change probability can be computed.

The probability compute part 105 computes, according to state quantities $(x, \theta)$ and weights $(\alpha, \beta)$ applied to the state quantities, respectively, respective lane change probabilities $(\rho(x), \rho(\theta))$. The weights $(\alpha, \beta)$ applied to the above-mentioned state quantities are adjusted according to a lane width and a plurality of after-correction lane change probabilities $(\alpha \cdot \rho(x), \beta \cdot \rho(\theta))$ are computed. The plurality of after-correction lane change probabilities are used with the expression (1) to compute one after-correction lane change probability (P). With this, a computation accuracy of the lane change probability improves.

The movement prediction determine part 108 sets, for each lane width, one or a plurality of threshold values and selects one or a plurality of threshold values corresponding to the lane width indicated by the information obtained by the lane structure obtain part 104. The movement prediction determine part 108 compares the selected threshold value (an example of the after-correction threshold value) with the lane change probability and predicts a lane change to be conducted by the second vehicle 12. Without receiving an influence of the lane width, the lane change is properly predictable.

"To set a plurality of threshold values" is to set threshold values for state quantities, respectively, used to compute a lane change probability. The movement prediction determine part 108 compares, for each of the state quantities $(x, \theta, ...)$, a selected threshold value with a lane change probability $(\rho(x), \rho(\theta), ...)$, thereby determining whether or not the second vehicle 12 conducts a lane change. Without receiving an influence of the lane width, the lane change is properly predictable.

"To set a plurality of threshold values" is, for multistage-controlling the first inter-vehicle distance (38a, 38b) or the speed of the own vehicle 11, to set a plurality of threshold values for a state quantity used to compute a lane change probability or for the lane change probability. Without receiving an influence of the lane width, a multistage vehicle control of the own vehicle 11 is realizable to secure safety with respect to the lane change of the second vehicle 12.

When correcting a threshold value according to the lane width (32a, 32b), the probability compute part 105 may compute a lane change probability on an assumption that the second vehicle 12 is positioned on the lane boundary line 31. Without receiving an influence of the lane width, the lane change probability is properly computable.

(Comparative Example, not forming part of the claimed subject matter) The motion prediction apparatus of other vehicle and the motion prediction method of other vehicle according to a comparative example useful for understanding the present invention differ from those of the first embodiment in that they correct at least one of the lane change probability and threshold value according to a position of the second vehicle in the adjacent lane G2 instead of the lane width (32a, 32b) of the adjacent lane G2. As illustrated in Figs. 4A and 4B, the vehicles (11, 12) are supposed to usually run at a lane width directional center of the respective lanes (G1, G2). Accordingly, if the lane width (32a, 32b) changes, the position of the second vehicle 12 with respect to the own vehicle 11 or the lane boundary line 31 changes accordingly. For example, if the lane width (32a, 32b) changes, a lane width directional distance from the own vehicle 11 or the lane boundary line 31 to the second vehicle 12, i.e., the relative position of the second vehicle 12 with respect to the own vehicle 11 or the lane boundary line 31 changes accordingly. Due to this, instead of the lane width (32a, 32b) of the adjacent lane G2, the lane width directional position of the second vehicle 12 with respect to the own vehicle 11 or the lane boundary line 31 is used to correct at least one of the lane change probability or threshold value, thereby providing functions and effects similar to those of the first embodiment.

Like the first embodiment, the motion prediction apparatus of other vehicle and the motion prediction method of other vehicle according to the comparative **example** effectively function in, for example, the running scenes illustrated in Figs. 4A and 4B. By the way, the running scenes such as those illustrated in Figs. 4A and 4B are examples of running scenes in which the motion prediction method of other vehicle and the motion prediction of apparatus other vehicle according to the comparative example effectively function and are not intended to limit the scope of application of the motion prediction method of other vehicle and the motion prediction apparatus of other vehicle according to the comparative example.

The comparative example computes a lane change probability according to a state quantity of the second vehicle 12 and uses the lane change probability and a threshold value to predict a lane change to be conducted by the second vehicle 12. In other words, it employs the lane change probability and threshold value to determine whether or not the second vehicle 12 conducts a lane change.

As illustrated in Figs. 4A and 4B, if the position of the second vehicle 12 with respect to the own vehicle 11 or the lane boundary line 31 differs, a difference will occur in a state quantity of the second vehicle 12 when conducting a course change. For example, when conducting a course change, state quantities such as the attitude (yaw angle with respect to the lane boundary line 31), moving direction, lane width directional moving distance (approaching quantity), and running locus of the second vehicle 12 change according to the position of the second vehicle 12. Due to this, the comparative example obtains a lane width directional position of the second vehicle 12 with respect to the own vehicle 11 or a position of the second vehicle 12 with respect to the lane boundary line 31 and, according to the position of the second vehicle 12, corrects at least one of the lane change probability and threshold value. Thereafter, the comparative example compares the after-correction lane change probability with the before-correction threshold value, or compares the before-correction lane change probability with the after-correction threshold value, or compares the after-correction lane change probability with the after-correction threshold value, thereby predicting a lane change to be conducted by the second vehicle 12. Predicting a lane change by taking into account a position of the second vehicle 12 is able to suppress an erroneous lane change prediction or a prediction delay.

The configuration of the motion prediction apparatus of other vehicle according to the comparative example differs from the configuration of the motion prediction apparatus of other vehicle of the first embodiment in the below-mentioned points.

The probability compute part 105 corrects a lane change probability according to a position of the second vehicle 12 (i.e., a lane width directional distance from the own vehicle 11 or lane boundary line 31 to the second vehicle 12). For example, the probability compute part 105 changes a weight applied to a state quantity used to compute a lane change probability according to a lane width directional distance (33a, 33b, 34a, 34b) from the own vehicle 11 or lane boundary line 31 to the second vehicle 12. For example, if the distance (33a, 34a) is short, it is presumed that the second vehicle 12 conducts a lane change at an angle θ (state) smaller than that when the distance (33b, 34b) is long. Also, in a lane change determination, it is preferable to attach importance to the angle θ as the distance (33a, 33b, 34a, 34b) becomes smaller. Due to this, the probability compute part 105 increases a weight applied to the angle θ as the distance (33a, 33b, 34a, 34b) becomes shorter. In other words, the nearer the position of the second vehicle 12 to the own vehicle 11 or lane boundary line 31, the heavier the weight applied to the angle θ is increased. The probability compute part 105 may change, similar to the case of the angle θ, a weight applied to an attitude of the second vehicle 12 or a moving direction of the second vehicle 12 according to the position of the second vehicle 12.

For any other state quantity, the probability compute part 105 adjusts a weight applied to the state quantity according to the position of the second vehicle 12 instead of the lane width (32a, 32b).

The state quantity may be an acceleration of the second vehicle 12 or a proximity degree of the second vehicle 12 with respect to the first preceding vehicle 13a running in front of the second vehicle 12 in the adjacent lane (right lane G2). The probability compute part 105 increases, as the position of the second vehicle 12 becomes nearer to the own vehicle 11 or lane boundary line 31, a weight applied to the acceleration or proximity degree.

The state quantity may be, as illustrated in Figs. 6A and 6B, the first inter-vehicle distance (38a, 38b). The probability compute part 105 increases a weight applied to the first inter-vehicle distance as the position of the second vehicle 12 becomes farther from the own vehicle 11 or lane boundary line 31.

The state quantity may be, as illustrated in Figs. 7A to 7C, the second inter-vehicle distance (39a, 39b). The probability compute part 105 increases a weight applied to the second inter-vehicle distance (39a, 39b) as the position of the second vehicle 12 becomes farther from the own vehicle 11 or lane boundary line 31.

The state quantity may be, as illustrated in Figs. 5A and 5C, a size of the second vehicle 12 and a size of the first preceding vehicle (13a, 13b). The probability compute part 105 increases, as the position of the second vehicle 12 becomes nearer to the own vehicle 11 or lane boundary line 31, a weight applied to the size of the second vehicle 12 and the size of the first preceding vehicle (13a, 13b).

The state quantity may be a relative speed of the second vehicle 12 with respect to the own vehicle 11. The probability compute part 105 increases a weight applied to the relative speed as the position of the second vehicle 12 becomes farther from the own vehicle 11 or lane boundary line 31.

The probability compute part 105 may compute one lane change probability (P) according to state quantities $(x, \theta)$ and weights $(\alpha, \beta)$ applied to the state quantities $(x, \theta)$.

The movement prediction determine part 108 corrects a threshold value according to the position of the second vehicle 12. For example, the movement prediction determine part 108 corrects the threshold value according to the lane width directional distance (33a, 33b, 34a, 34b) from the own vehicle 11 or lane boundary line 31 to the second vehicle 12.

More precisely, the movement prediction determine part 108 beforehand sets one or a plurality of threshold values for each position of the second vehicle 12. For example, for each of the short distance (33a, 34a) and long distance (33b, 34b), one or a plurality of threshold values are set. The movement prediction determine part 108 selects one or a plurality of threshold values corresponding to a distance (33a, 33b, 34a, 34b) obtained by the lane structure obtain part 104. In this way, the movement prediction determine part 108 beforehand sets different threshold values for each position of the second vehicle 12 and selects, from among the threshold values, a threshold value corresponding to an actual position of the second vehicle 12, thereby correcting the threshold value.

The configuration of the motion prediction apparatus of other vehicle according to the comparative example is the same as, except the above-mentioned points, the configuration of the motion prediction apparatus of other vehicle according to the first embodiment explained with reference to Fig. 1.

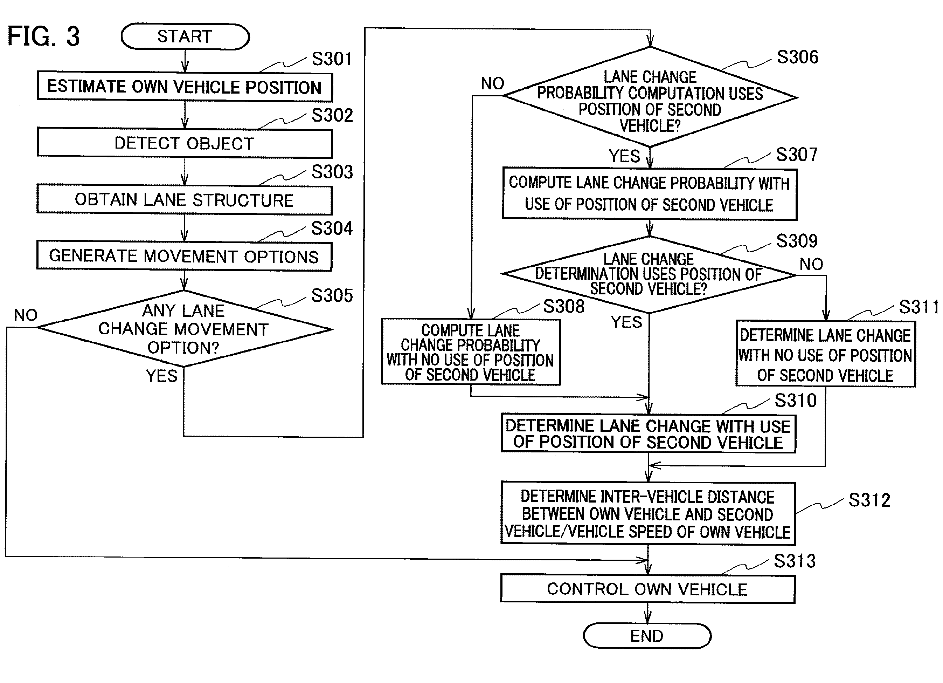

With reference to Fig. 3, as the motion prediction method of other vehicle according to the comparative example, an operational example of the motion prediction apparatus of other vehicle according to the comparative example will be explained. Figure 3 is repeatedly executed at predetermined intervals from when the ignition switch of the own vehicle 11 is turned ON (in the case of an electric car, a power source is turned ON) until when it is turned OFF. Also, a control flow of Fig.3 is based on an assumption that the own vehicle 11 is run by automated driving.

Steps S301 to S305 execute the same processing operations as those of the steps S201 to S205 of Fig. 2.

In step S306, the motion prediction apparatus of other vehicle determines, according to a user selected state in connection with a lane change probability correction, whether or not a lane change probability must be corrected. If the user has selected to correct the lane change probability according to a position of the second vehicle 12 (YES in S306), it advances to step S307. On the other hand, if the user has selected not to correct the lane change probability according to a position of the second vehicle 12 (NO in S306), it advances to step S308.

In the step S308, the probability compute part 105 computes a lane change probability according to a state quantity. The state quantity is one or a combination of two or more of the attitude, moving direction, and angle θ of the second vehicle 12, an acceleration of the second vehicle 12, a proximity degree of the second vehicle 12 with respect to the first preceding vehicle 13a, a first inter-vehicle distance (38a, 38b), a second inter-vehicle distance (39a, 39b), a size of the second vehicle 12 or first preceding vehicle (13a, 13b), and a relative speed of the second vehicle 12 with respect to the own vehicle 11. Thereafter, it advances to step S310.

In the step S307, the probability compute part 105 computes, similar to the step S308, a lane change probability according to a state quantity. Further, the probability compute part 105 corrects the lane change probability according to a position of the second vehicle 12. More precisely, the probability compute part 105 changes, according to the position of the second vehicle 12, a weight applied to the state quantity used to compute the lane change probability, thereby correcting the lane change probability. Thereafter, it advances to step S309.

In the step S309, the motion prediction apparatus of other vehicle determines, according to a user selected state concerning a threshold value correction, whether or not a threshold value must be corrected. If correcting the threshold value according to the position of the second vehicle 12 has been selected by the user (YES in S309), it advances to step S310. On the other hand, if not correcting the threshold value according to the position of the second vehicle 12 has been selected by the user (NO in S309), it advances to step S311.

In the step S311, the movement prediction determine part 108 compares the lane change probability corrected in the step S307 (after-correction lane change probability) with a before-correction threshold value. If the after-correction lane change probability is greater than the before-correction threshold value, the movement prediction determine part 108 determines that the second vehicle 12 conducts a lane change. On the other hand, if the after-correction lane change probability is equal to or smaller than the before-correction threshold value, the movement prediction determine part 108 determines that the second vehicle 12 conducts no lane change. Thereafter, it advances to step S312.

In the step S310, the movement prediction determine part 108 first corrects the threshold value according to the position of the second vehicle 12. Then, if the step S308 has been passed through, the movement prediction determine part 108 compares the lane change probability computed in the step S308 (before-correction lane change probability) with the corrected threshold value (after-correction threshold value). If the before-correction lane change probability is greater than the after-correction threshold value, the movement prediction determine part 108 determines that the second vehicle 12 conducts a lane change. On the other hand, if the before-correction lane change probability is equal to or smaller than the after-correction threshold value, the movement prediction determine part 108 determines that the second vehicle 12 conducts no lane change.

On the other hand, if the step S307 has been passed through, the movement prediction determine part 108 compares the lane change probability corrected in the step S307 (after-correction lane change probability) with the after-correction threshold value. If the after-correction lane change probability is greater than the after-correction threshold value, the movement prediction determine part 108 determines that the second vehicle 12 conducts a lane change. On the other hand, if the after-correction lane change probability is equal to or smaller than the after-correction threshold value, the movement prediction determine part 108 determines that the second vehicle 12 conducts no lane change. Thereafter, it advances to step S312.

In the steps S312 and S313, the same processing operations as those of the steps S212 and S213 of Fig. 2 are executed.

As explained above, according to the comparative example, the below-mentioned functions and effects are obtained.

As illustrated in Figs. 4A and 4B, in an actual environment, a vehicle runs through locations with different road widths and lane widths. If the lane width differs, the position of the second vehicle 12 with respect to the own vehicle 11 or lane boundary line 31 changes, and also, the movement of the second vehicle 12 when conducting a lane change differs. Due to this, the motion prediction apparatus of other vehicle corrects, according to a position of the second vehicle 12 in a lane width direction with respect to the own vehicle 11 or lane boundary line 31, at least one of the lane change probability and threshold value. The movement prediction determine part 108 compares one of the lane change probability and threshold value corrected according to the position of the second vehicle 12 with the other of the lane change probability and threshold value not corrected according to the position of the second vehicle 12. Alternatively, the movement prediction determine part 108 compares the lane change probability and threshold value both corrected according to the position of the second vehicle 12 with each other. According to any one of the comparison results, the movement prediction determine part 108 determines whether or not the second vehicle 12 conducts a lane change. Predicting a lane change by taking into account the lane width (32a, 32b) of the adjacent lane G2 is able to suppress an erroneous lane change prediction or a prediction delay. Further, it suppresses a deceleration of the own vehicle 11 due to an erroneous prediction or a sudden deceleration of the own vehicle 11 due to a prediction delay.

The probability compute part 105 changes a weight applied to a state quantity according to a position of the second vehicle 12, thereby correcting a lane change probability according to the position of the second vehicle 12. Even on roads with different lane widths, it is possible to compute a lane change probability without receiving an influence of the lane widths.

The state quantity may be an attitude of the second vehicle 12, a moving direction of the second vehicle 12, or an angle $\theta$ formed by the moving direction of the second vehicle 12 and a lane direction of the right lane G2. The probability compute part 105 increases, as the position of the second vehicle 12 becomes closer to the own vehicle 11 or lane boundary line 31, a weight applied to the attitude, moving direction, or angle $\theta$. As the position of the second vehicle 12 becomes nearer to the own vehicle 11 or lane boundary line 31, it is possible, in determining a lane change, to attach importance to the attitude, moving direction, or angle $\theta$. Without receiving an influence of lane widths, a proper lane change probability can be computed.

The state quantity may be an acceleration of the second vehicle 12 or a proximity degree of the second vehicle 12 with respect to the first preceding vehicle 13a. The probability compute part 105 increases, as the position of the second vehicle 12 becomes nearer to the own vehicle 11 or lane boundary line 31, a weight applied to the acceleration or proximity degree. As the position of the second vehicle 12 becomes nearer to the own vehicle or lane boundary line 31, it is possible, in determining a lane change, to attach importance to the acceleration or proximity degree. Without receiving an influence of lane widths, a proper lane change probability can be computed.

The state quantity may be, as illustrated in Figs. 6A and 6B, the first inter-vehicle distance (38a, 38b). The probability compute part 105 increases, as the position of the second vehicle 12 becomes farther from the own vehicle 11 or lane boundary line 31, a weight applied to the first inter-vehicle distance. As the position of the second vehicle 12 becomes farther from the own vehicle 11 or lane boundary line 31, it is possible, in determining a lane change, to attach importance to the first inter-vehicle distance. Without receiving an influence of lane widths, a proper lane change probability can be computed.

The state quantity may be, as illustrated in Figs. 7A to 7C, the second inter-vehicle distance (39a, 39b). The probability compute part 105 increases, as the position of the second vehicle 12 becomes farther from the own vehicle 11 or lane boundary line 31, a weight applied to the second inter-vehicle distance. As the position of the second vehicle 12 becomes farther from the own vehicle 11 or lane boundary line 31, it is possible, in determining a lane change, to attach importance to the second inter-vehicle distance. Without receiving an influence of lane widths, a proper lane change probability can be computed.

The state quantity may be, as illustrated in Figs. 5A and 5C, the size of the second vehicle 12, the size of the first preceding vehicle (13a, 13b), or a vehicle height difference. The probability compute part 105 increases, as the position of the second vehicle becomes nearer to the own vehicle 11 or lane boundary line 31, a weight applied to the size of the second vehicle 12, the size of the first preceding vehicle (13a, 13b), or the vehicle height difference. As the position of the second vehicle becomes nearer to the own vehicle 11 or lane boundary line 31, it is possible, in determining a lane change, to attach importance to the size of the second vehicle 12, the size of the first preceding vehicle (13a, 13b), or the vehicle height difference. Without receiving an influence of lane widths, a proper lane change probability can be computed.

The state quantity may be a relative speed of the second vehicle 12 with respect to the own vehicle 11. The probability compute part 105 increases, as the position of the second vehicle 12 becomes farther from the own vehicle 11 or lane boundary line 31, a weight applied to the relative speed. As the position of the second vehicle 12 becomes farther from the own vehicle 11 or lane boundary line 31, it is possible, in determining a lane change, to attach importance to the relative speed. Without receiving an influence of lane widths, a proper lane change probability can be computed.

The probability compute part 105 computes, according to state quantities (x, θ), respective lane change probabilities (ρ(x), ρ(θ)). Weights (α, β) applied to the above-mentioned state quantities are adjusted according to a lane width and a plurality of after-correction lane change probabilities (α·ρ(x), β·ρ(θ)) are computed. The plurality of after-correction lane change probabilities are used with the expression (1) to compute one after-correction lane change probability (P). With this, a computation accuracy of the lane change probability improves.

The movement prediction determine part 108 sets, for each position of the second vehicle 12, one or a plurality of threshold values and selects one or a plurality of threshold values corresponding to a position of the second vehicle 12 indicated by information obtained by the lane structure obtain part 104. The movement prediction determine part 108 compares the selected threshold value (an example of an after-correction threshold value) with the lane change probability and predicts a lane change to be conducted by the second vehicle 12. Without receiving an influence of lane widths, the lane change is properly predictable.

"To set a plurality of threshold values" is to set threshold values for state quantities used for computing a lane change probability, respectively. The movement prediction determine part 108 compares, for each of the state quantities (x, θ, ...), a selected threshold value with a lane change probability (ρ(x), ρ(θ), ...), thereby determining whether or not the second vehicle 12 conducts a lane change. Without receiving an influence of lane widths, the lane change is properly predictable.

"To set a plurality of threshold values" is to set, for multistage-controlling the first inter-vehicle distance (38a, 38b) or the speed of the own vehicle 11, a plurality of threshold values for state quantities used to compute a lane change probability or for a lane change probability. Without receiving an influence of lane widths, a multistage vehicle control of the own vehicle 11 is realizable to secure safety with respect to a lane change of the second vehicle 12.

Each of the functions mentioned in the above-mentioned embodiments is realizable with one or a plurality of processing circuits. The processing circuits include programmed processing devices such as processing devices containing electric circuits. Also, the processing devices include application specific integrated circuits (ASICs) and conventional circuit parts arranged to execute the functions mentioned in the embodiments.

DESCRIPTION OF REFERENCE NUMERALS

11: Own vehicle
12: Second vehicle
13a, 13b: First preceding vehicle
14: Second preceding vehicle
32a, 32b: Lane width
33a, 33b: Distance (First proximity quantity)
34a, 34b: Distance (Second proximity quantity)
37: Distance (Proximity degree)
38a, 38b: First inter-vehicle distance
39a, 39b: Second inter-vehicle distance
G1: Own lane
G2: Adjacent lane

**Claims**

1. A motion prediction method, performed by a motion prediction apparatus, of computing a lane change probability indicating a probability of a second vehicle (12) conducting a lane change in front of the own vehicle (11) from an adjacent lane (G2) into an own lane (G1) in which the own vehicle (11) is running, according to a state quantity corresponding to a behavior of the second vehicle (12) running in the adjacent lane (G2) to the own lane (G1), and predicting the lane change to be conducted by the second vehicle (12) with use of the lane change probability and a preset threshold value, comprising the step of

computing the lane change probability with no use of a lane width (32a, 32b) of the adjacent lane (G2) according to the state quantity;

**characterized by** the steps of:

obtaining information indicating the lane width (32a, 32b) of the adjacent lane (G2);
correcting, according to the lane width (32a, 32b), at least one of the computed lane change probability and the preset threshold value; and
comparing the corrected lane change probability with the preset threshold value, or comparing the computed lane change probability with the corrected threshold value, or comparing the corrected lane change probability with the corrected threshold value, thereby predicting whether or not the second vehicle (12) conducts the lane change,
wherein the correcting, according to the lane width (32a, 32b), of the lane change probability is to change, according to the lane width (32a, 32b), a weight applied to the state quantity;
wherein the correcting, according to the lane width (32a, 32b), of the preset threshold value includes:
selecting, from among different threshold values set beforehand for the lane widths of the adjacent lane (G2), a threshold value corresponding to the lane width indicated by the obtained information.

2. The motion prediction method as set forth in claim 1, **characterized in that**:

the state quantity includes a position of the second vehicle (12), a first proximity quantity that is an approaching quantity of the second vehicle (12) to the own vehicle (11), or a second proximity quantity that is an approaching quantity of the second vehicle (12) to a lane boundary line (31) separating the own lane (G1) from the adjacent lane (G2); and
as the lane width (32a, 32b) becomes narrower, the weight applied to the position, first proximity quantity, or second proximity quantity is increased.

3. The motion prediction method as set forth in claim 1, **characterized in that**:

the state quantity includes at least one of an attitude of the second vehicle (12), a moving direction of the second vehicle (12), and an angle computed from at least one of the attitude and moving direction and a lane direction of the adjacent lane (G2) at a position of the second vehicle (12); and
as the lane width (32a, 32b) becomes narrower, the weight applied to the attitude, the moving direction, or the angle is increased.

4. The motion prediction method as set forth in claim 1, **characterized in that**:

the state quantity includes an acceleration of the second vehicle (12) or a proximity degree of the second vehicle (12) with respect to a first preceding vehicle (13a) running in front of the second vehicle (12) in the adjacent lane; and
as the lane width (32a, 32b) becomes narrower, a weight applied to the acceleration or the proximity degree is increased.

5. The motion prediction method as set forth in claim 1, **characterized in that**:

the state quantity includes a first inter-vehicle distance (38a, 38b) between the second vehicle (12) and the own vehicle (11); and
as the lane width (32a, 32b) becomes narrower, a weight applied to the first inter-vehicle distance is increased.

6. The motion prediction method as set forth in claim 1, **characterized in that**:

the state quantity includes a second inter-vehicle distance between the own vehicle (11) and a second preceding vehicle (14) running in front of the own vehicle (11) in the own lane (G1); and
as the lane width becomes narrower, a weight applied to the second inter-vehicle distance is increased.

7. The motion prediction method as set forth in claim 1, **characterized in that**:

the state quantity includes a size of the second vehicle (12) and a size of a first preceding vehicle (13a, 13b) running in front of the second vehicle (12) in the adjacent lane (G2); and
as the lane width becomes narrower, a weight applied to the size of the second vehicle (12) and the size of the first preceding vehicle (13a, 13b) is increased.

8. The motion prediction method as set forth in claim 1, **characterized in that**:

the state quantity includes a relative speed of the second vehicle with respect to the own vehicle; and
as the lane width becomes wider, a weight applied to the relative speed is increased.

9. The motion prediction method as set forth in any one of claims 2 to 8, **characterized in that**, according to the state quantity and the weight applied to the state quantity, the lane change probability is computed.

10. The motion prediction method as set forth in claim 1, **characterized in that**, when correcting the threshold value according to the lane width (32a, 32b), the lane change probability is computed on an assumption that the second vehicle (12) is positioned on a lane boundary line separating the own lane (G1) from the adjacent lane (G2).

11. The motion prediction method as set forth in claim 1, **characterized in that**:

setting the plurality of threshold values is to set the threshold value for each state quantity used to compute the lane change probability; and
for each state quantity, a selected one of the threshold values is compared with the lane change probability.

12. A motion prediction apparatus for computing a lane change probability indicating a probability of a second vehicle (12) conducting a lane change in front of the own vehicle (11) from the adjacent lane (G2) into the own lane (G1) according to a state quantity corresponding to a behavior of a second vehicle (12) running in an adjacent lane (G2) to an own lane (G1) in which an own vehicle (11) is running, and predicting the lane change to be conducted by the second vehicle (12) with use of the lane change probability and a preset threshold value,

the motion prediction apparatus comprising a control unit that computes the lane change probability with no use of a lane width (32a, 32b) of the adjacent lane (G2) according to the state quantity;
**characterized in that** the control unit further:

obtains information indicating the lane width (32a, 32b) of the adjacent lane (G2);
corrects, according to the lane width, at least one of the computed lane change probability and the preset threshold value; and
compares the corrected lane change probability with the preset threshold value, or compares the computed lane change probability with the corrected threshold value, or compares the corrected lane change probability with the corrected threshold value, thereby predicting whether or not the second vehicle (12) conducts the lane change,
wherein the correcting, according to the lane width (32a, 32b), of the lane change probability is to change, according to the lane width (32a, 32b), a weight applied to the state quantity;
wherein the correcting, according to the lane width (32a, 32b), of the preset threshold value includes:
selecting, from among different threshold values set beforehand for the lane widths of the adjacent lane (G2), a threshold value corresponding to the lane width indicated by the obtained information.

**Patentansprüche**

1. Bewegungsvorhersageverfahren, ausgeführt durch eine Bewegungsvorhersagevorrichtung, des Berechnens einer Spurwechselwahrscheinlichkeit, die eine Wahrscheinlichkeit angibt, dass ein zweites Fahrzeug (12) einen Spurwechsel vor dem eigenen Fahrzeug (11) von einer benachbarten Spur (G2) in eine eigene Spur (G1), in der das eigene Fahrzeug (11) fährt, ausführt, gemäß einer Zustandsgröße, die einem Verhalten des zweiten Fahrzeugs (12), das in der benachbarten Spur (G2) zu der eigenen Spur (G1) fährt, entspricht, und Vorhersagens des durch das zweite Fahrzeug (12) auszuführenden Spurwechsels unter Verwendung der Spurwechselwahrscheinlichkeit und eines voreingestellten Schwellenwertes, umfassend den Schritt des

Berechnens der Spurwechselwahrscheinlichkeit ohne Verwendung einer Spurbreite (32a, 32b) der benachbarten Spur (G2) gemäß der Zustandsgröße;
**gekennzeichnet durch** die Schritte des:

Beschaffens von Information, die die Spurbreite (32a, 32b) der benachbarten Spur (G2) angibt;
Korrigierens von wenigstens entweder der berechneten Spurwechselwahrscheinlichkeit oder des voreingestellten Schwellenwertes, gemäß der Spurbreite (32a, 32b); und
Vergleichens der korrigierten Spurwechselwahrscheinlichkeit mit dem voreingestellten Schwellenwert oder Vergleichens der berechneten Spurwechselwahrscheinlichkeit mit dem korrigierten Schwellenwert oder Vergleichens der korrigierten Spurwechselwahrscheinlichkeit mit dem korrigierten Schwellenwert, dadurch Vorhersagens, ob das zweite Fahrzeug (12) den Spurwechsel ausführt,
wobei das Korrigieren der Spurwechselwahrscheinlichkeit gemäß der Spurbreite (32a, 32b) das Ändern einer Gewichtung, die auf die Zustandsgröße angewendet wird, gemäß der Spurbreite (32a, 32b), ist;
wobei das Korrigieren des voreingestellten Schwellenwertes gemäß der Spurbreite (32a, 32b) enthält:
das Auswählen eines der durch die beschaffte Information angegebenen Spurbreite entsprechenden Schwellenwertes aus einer Menge verschiedener Schwellenwerte, die vorab für die Spurbreiten der benachbarten Spur (G2) festgesetzt wurden.

2.  Bewegungsvorhersageverfahren nach Anspruch 1, **dadurch gekennzeichnet, dass**:

    die Zustandsgröße eine Position des zweiten Fahrzeugs (12), eine erste Größe der Nähe, die eine Annährungsgröße des zweiten Fahrzeugs (12) an das erste Fahrzeug (11) ist, oder eine zweite Größe der Nähe die eine Annährungsgröße des zweiten Fahrzeugs (12) an eine Spurgrenzlinie (31) ist, die die eigene Spur (G1) von der benachbarten Spur (G2) trennt, enthält; und
    die Gewichtung, die auf die Position, erste Größe der Nähe oder zweite Größe der Nähe angewendet wird, erhöht wird, wenn die Spurbreite (32a, 32b) enger wird.

3.  Bewegungsvorhersageverfahren nach Anspruch 1, **dadurch gekennzeichnet, dass**:

    die Zustandsgröße wenigstens entweder die Lage (original: attitude) des zweiten Fahrzeugs (12), eine Bewegungsrichtung des zweiten Fahrzeugs (12) oder einen Winkel, der aus wenigstens entweder der Lage und Bewegungsrichtung und einer Spurrichtung der benachbarten Spur (G2) an einer Position des zweiten Fahrzeugs (12) berechnet wird, enthält; und
    die Gewichtung, die auf die Lage, die Bewegungsrichtung oder den Winkel angewendet wird, erhöht wird, wenn die Spurbreite (32a, 32b) enger wird.

4.  Bewegungsvorhersageverfahren nach Anspruch 1, **dadurch gekennzeichnet, dass**:

    die Zustandsgröße eine Beschleunigung des zweiten Fahrzeugs (12) oder einen Grad der Nähe des zweiten Fahrzeugs (12) bezüglich eines ersten vorausfahrenden Fahrzeugs (13a), welches vor dem zweiten Fahrzeug (12) in der benachbarten Spur fährt, enthält; und
    eine Gewichtung, die auf die Beschleunigung oder den Grad der Nähe angewendet wird, erhöht wird, wenn die Spurbreite (32a, 32b) enger wird.

5.  Bewegungsvorhersageverfahren nach Anspruch 1, **dadurch gekennzeichnet, dass**:

    die Zustandsgröße einen ersten Zwischenfahrzeugabstand (38a, 38b) zwischen dem zweiten Fahrzeug (12) und dem eigenen Fahrzeug (11) enthält; und
    eine auf den ersten Zwischenfahrzeugabstand angewendete Gewichtung erhöht wird, wenn die Spurbreite (32a, 32b) enger wird.

6.  Bewegungsvorhersageverfahren nach Anspruch 1, **dadurch gekennzeichnet, dass**:

    Die Zustandsgröße einen zweiten Zwischenfahrzeugabstand zwischen dem ersten Fahrzeug (11) und einem zweiten vorausfahrenden Fahrzeug (14), welches vor dem eigenen Fahrzeug (11) in der eigenen Spur (G1) fährt, enthält; und
    eine auf den zweiten Zwischenfahrzeugabstand angewendete Gewichtung erhöht wird, wenn die Spurbreite enger wird.

7.  Bewegungsvorhersageverfahren nach Anspruch 1, **dadurch gekennzeichnet, dass**:

    die Zustandsgröße eine Größe des zweiten Fahrzeugs (12) und eine Größe eines ersten vorausfahrenden Fahrzeugs (13a, 13b), welches vor dem zweiten Fahrzeug (12) in der benachbarten Spur (G2) fährt, enthält; und
    eine Gewichtung, die auf die Größe des zweiten Fahrzeugs (12) und die Größe des ersten vorausfahrenden Fahrzeugs (13a, 13b) angewendet wird, erhöht wird, wenn die Spurbreite enger wird.

8. Bewegungsvorhersageverfahren nach Anspruch 1, **dadurch gekennzeichnet, dass**:

   die Zustandsgröße einer Relativgeschwindigkeit des zweiten Fahrzeugs bezüglich des eigenen Fahrzeugs enthält; und
   eine auf die Relativgeschwindigkeit angewendete Gewichtung erhöht wird, wenn die Spur breiter wird.

9. Bewegungsvorhersageverfahren nach einen der Ansprüche 2 bis 8, **dadurch gekennzeichnet, dass** die Spurwechselwahrscheinlichkeit gemäß der Zustandsgröße und der auf die Zustandsgröße angewendeten Gewichtung berechnet wird.

10. Bewegungsvorhersageverfahren nach Anspruch 1, **dadurch gekennzeichnet, dass**, wenn der Schwellenwert gemäß der Spurbreite (32a, 32b) korrigiert wird, die Spurwechselwahrscheinlichkeit berechnet wird unter der Annahme, dass das zweite Fahrzeug (12) an einer Spurgrenzlinie, die die eigene Spur (G1) von der benachbarten Spur (G2) trennt, positioniert ist.

11. Bewegungsvorhersageverfahren nach Anspruch 1, **dadurch gekennzeichnet, dass**:

    das Festsetzen der Mehrzahl von Schwellenwerten das Festsetzen des Schwellenwertes für jede Zustandsgröße, die zum Berechnen der Spurwechselwahrscheinlichkeit verwendet wird, ist;
    für jede Zustandsgröße ein ausgewählter der Schwellenwerte mit der Spurwechselwahrscheinlichkeit verglichen wird.

12. Bewegungsvorhersagevorrichtung zum Berechnen einer Spurwechselwahrscheinlichkeit, die eine Wahrscheinlichkeit angibt, dass ein zweites Fahrzeug (12) einen Spurwechsel vor dem eigenen Fahrzeug (11) von der benachbarten Spur (G2) in die eigene Spur (G1), ausführt, gemäß einer Zustandsgröße, die einem Verhalten eines zweiten Fahrzeugs (12), das in einer benachbarten Spur (G2) zu einer eigenen Spur (G1), in der das eigene Fahrzeug (11) fährt, fährt, entspricht, und Vorhersagen des durch das zweite Fahrzeug (12) auszuführenden Spurwechsels unter Verwendung der Spurwechselwahrscheinlichkeit und eines voreingestellten Schwellenwertes,

    wobei die Bewegungsvorhersagevorrichtung eine Steuereinheit umfasst, die die Spurwechselwahrscheinlichkeit ohne Benutzung einer Spurbreite (32a, 32b) der benachbarten Spur (G2) gemäß der Zustandsgröße berechnet;
    **dadurch gekennzeichnet, dass** die Steuereinheit weiterhin
    Information, die die Spurbreite (32a, 32b) der benachbarten Spur (G2) angibt, beschafft;
    wenigstens entweder die berechnete Spurwechselwahrscheinlichkeit oder den voreingestellten Schwellenwert gemäß der Spurbreite korrigiert; und
    die korrigierte Spurwechselwahrscheinlichkeit mit dem voreingestellten Schwellenwert vergleicht, oder die berechnete Spurwechselwahrscheinlichkeit mit dem korrigierten Schwellenwert vergleicht, oder die korrigierte Spurwechselwahrscheinlichkeit mit dem korrigierten Schwellenwert vergleicht, dadurch vorhersagt, ob das zweite Fahrzeug (12) den Spurwechsel ausführt,
    wobei das Korrigieren der Spurwechselwahrscheinlichkeit gemäß der Spurbreite (32a, 32b) das Ändern einer Gewichtung, die auf die Zustandsgröße angewendet wird, gemäß der Spurbreite (32a, 32b), ist;
    wobei das Korrigieren des voreingestellten Schwellenwertes gemäß der Spurbreite (32a, 32b) enthält:
    das Auswählen eines der durch die beschaffte Information angegebenen Spurbreite entsprechenden Schwellenwertes aus einer Menge verschiedener Schwellenwerte, die vorab für die Spurbreiten der benachbarten Spur (G2) festgesetzt wurden.

## Revendications

1. Procédé de prédiction de mouvement, réalisé par un appareil de prédiction de mouvement, permettant de calculer une probabilité de changement de voie indiquant une probabilité qu'un deuxième véhicule (12) effectue un changement de voie devant son propre véhicule (11) à partir d'une voie adjacente (G2) dans une propre voie (G1) dans laquelle circule le propre véhicule (11), selon une grandeur d'état correspondant à un comportement du deuxième véhicule (12) circulant dans la voie adjacente (G2) vers la propre voie (G1), et de prédire le changement de voie devant être effectué par le deuxième véhicule (12) en utilisant la probabilité de changement de voie et une valeur seuil prédéfinie, comprenant l'étape consistant à

calculer la probabilité de changement de voie sans utiliser une largeur de voie (32a, 32b) de la voie adjacente (G2) selon la grandeur d'état ;
**caractérisé par** les étapes consistant à :

obtenir des informations indiquant la largeur de voie (32a, 32b) de la voie adjacente (G2) ;
corriger, selon la largeur de voie (32a, 32b), au moins l'une parmi la probabilité de changement de voie calculée et la valeur seuil prédéfinie ; et
comparer la probabilité de changement de voie corrigée avec la valeur seuil prédéfinie, ou comparer la probabilité de changement de voie calculée avec la valeur seuil corrigée, ou comparer la probabilité de changement de voie corrigée avec la valeur seuil corrigée, prédisant ainsi si le deuxième véhicule (12) effectue ou non le changement de voie,
dans lequel la correction, selon la largeur de voie (32a, 32b), de la probabilité de changement de voie consiste à changer, selon la largeur de voie (32a, 32b), un poids appliqué à la grandeur d'état ;
dans lequel la correction, selon la largeur de voie (32a, 32b), de la valeur seuil prédéfinie comprend :
la sélection, parmi différentes valeurs seuil définies au préalable pour les largeurs de voie de la voie adjacente (G2), d'une valeur seuil correspondant à la largeur de voie indiquée par les informations obtenues.

2. Procédé de prédiction de mouvement selon la revendication 1, **caractérisé en ce que** :

la grandeur d'état comprend une position du deuxième véhicule (12), une première grandeur de proximité qui est une grandeur d'approche du deuxième véhicule (12) au propre véhicule (11), ou une deuxième grandeur de proximité qui est une grandeur d'approche du deuxième véhicule (12) à une ligne de délimitation de voie (31) séparant la propre voie (G1) de la voie adjacente (G2) ; et
à mesure que la largeur de voie (32a, 32b) se rétrécit, le poids appliqué à la position, la première grandeur de proximité ou la deuxième quantité de proximité est augmenté(e).

3. Procédé de prédiction de mouvement selon la revendication 1, **caractérisé en ce que** :

la grandeur d'état comprend au moins l'une parmi une attitude du deuxième véhicule (12), une direction de déplacement du deuxième véhicule (12), et un angle calculé à partir d'au moins l'une parmi l'attitude et la direction de déplacement et une direction de voie de la voie adjacente (G2) à une position du deuxième véhicule (12) ; et
à mesure que la largeur de voie (32a, 32b) se rétrécit, le poids appliqué à l'attitude, la direction de déplacement, ou l'angle est augmenté(e).

4. Procédé de prédiction de mouvement selon la revendication 1, **caractérisé en ce que** :

la grandeur d'état comprend une accélération du deuxième véhicule (12) ou un degré de proximité du deuxième véhicule (12) par rapport à un premier véhicule précédent (13a) circulant devant le deuxième véhicule (12) dans la voie adjacente ; et
à mesure que la largeur de voie (32a, 32b) se rétrécit, un poids appliqué à l'accélération ou au degré de proximité est augmenté.

5. Procédé de prédiction de mouvement selon la revendication 1, **caractérisé en ce que** :

la grandeur d'état comprend une première distance inter-véhicules (38a, 38b) entre le deuxième véhicule (12) et le propre véhicule (11) ; et
à mesure que la largeur de voie (32a, 32b) se rétrécit, un poids appliqué à la première distance inter-véhicules est augmenté.

6. Procédé de prédiction de mouvement selon la revendication 1, **caractérisé en ce que** :

la grandeur d'état comprend une deuxième distance inter-véhicules entre le propre véhicule (11) et un deuxième véhicule précédent (14) circulant devant le propre véhicule (11) dans la propre voie (G1) ; et
à mesure que la largeur de voie se rétrécit, un poids appliqué à la deuxième distance inter-véhicules est augmenté.

**7.** Procédé de prédiction de mouvement selon la revendication 1, **caractérisé en ce que** :

la grandeur d'état comprend une taille du deuxième véhicule (12) et une taille d'un premier véhicule précédent (13a, 13b) circulant devant le deuxième véhicule (12) dans la voie adjacente (G2) ; et
à mesure que la largeur de voie se rétrécit, un poids appliqué à la taille du deuxième véhicule (12) et à la taille du premier véhicule précédent (13a, 13b) est augmenté.

**8.** Procédé de prédiction de mouvement selon la revendication 1, **caractérisé en ce que** :

la grandeur d'état comprend une vitesse relative du deuxième véhicule par rapport au propre véhicule ; et
à mesure que la largeur de voie devient plus grande, un poids appliqué à la vitesse relative est augmenté.

**9.** Procédé de prédiction de mouvement selon l'une quelconque des revendications 2 à 8, **caractérisé en ce que**, selon la grandeur d'état et le poids appliqué à la grandeur d'état, la probabilité de changement de voie est calculée.

**10.** Procédé de prédiction de mouvement selon la revendication 1, **caractérisé en ce que**, lors de la correction de la valeur seuil selon la largeur de voie (32a, 32b), la probabilité de changement voie est calculée en supposant que le deuxième véhicule (12) est positionné sur une ligne de délimitation de voie séparant la propre voie (G1) de la voie adjacente (G2).

**11.** Procédé de prédiction de mouvement selon la revendication 1, **caractérisé en ce que** :

la définition de la pluralité de valeurs seuil consiste à définir la valeur seuil pour chaque grandeur d'état utilisée pour calculer la probabilité de changement de voie ; et
pour chaque grandeur d'état, une valeur sélectionnée parmi les valeurs seuil est comparée à la probabilité de changement de voie.

**12.** Appareil de prédiction de mouvement pour calculer une probabilité de changement de voie indiquant une probabilité qu'un deuxième véhicule (12) effectue un changement de voie devant son propre véhicule (11) à partir de la voie adjacente (G2) dans la propre voie (G1) selon une grandeur d'état correspondant à un comportement d'un deuxième véhicule (12) circulant dans une voie adjacente (G2) vers une propre voie (G1) dans laquelle circule un propre véhicule (11), et prédire le changement de voie devant être effectué par le deuxième véhicule (12) en utilisant la probabilité de changement de voie et une valeur seuil prédéfinie,

l'appareil de prédiction de mouvement comprenant une unité de commande qui calcule la probabilité de changement de voie sans utiliser une largeur de voie (32a, 32b) de la voie adjacente (G2) selon la grandeur d'état;
**caractérisé en ce que** l'unité de commande en outre :

obtient des informations indiquant la largeur de voie (32a, 32b) de la voie adjacente (G2) ;
corrige, selon la largeur de voie, au moins l'une parmi la probabilité de changement de voie calculée et la valeur seuil prédéfinie ; et
compare la probabilité de changement de voie corrigée avec la valeur seuil prédéfinie, ou compare la probabilité de changement de voie calculée avec la valeur seuil corrigée, ou compare la probabilité de changement de voie corrigée avec la valeur seuil corrigée, prédisant ainsi si le deuxième véhicule (12) effectue ou non le changement de voie,
dans lequel la correction, selon la largeur de voie (32a, 32b), de la probabilité de changement de voie consiste à changer, selon la largeur de voie (32a, 32b), un poids appliqué à la grandeur d'état ;
dans lequel la correction, selon la largeur de voie (32a, 32b), de la valeur seuil prédéfinie comprend :
la sélection, parmi différentes valeurs seuil définies au préalable pour les largeurs de voie de la voie adjacente (G2), d'une valeur seuil correspondant à la largeur de voie indiquée par les informations obtenues.

# FIG. 1

EP 3 925 845 B1

# FIG. 2

```
          ( START )
              │
              ▼  S201
   ┌─────────────────────────┐
   │ ESTIMATE OWN VEHICLE     │
   │ POSITION                 │
   └─────────────────────────┘
              │  S202
              ▼
   ┌─────────────────────────┐
   │ DETECT OBJECT            │
   └─────────────────────────┘
              │  S203
              ▼
   ┌─────────────────────────┐
   │ OBTAIN LANE STRUCTURE    │
   └─────────────────────────┘
              │  S204
              ▼
   ┌─────────────────────────┐
   │ GENERATE MOVEMENT        │
   │ OPTIONS                  │
   └─────────────────────────┘
              │  S205
              ▼
  NO ◄─── ◇ ANY LANE CHANGE
          MOVEMENT OPTION? ◇
              │ YES
```

S206 — LANE CHANGE PROBABILITY COMPUTATION USES LANE WIDTH?
- NO
- YES → S207 — COMPUTE LANE CHANGE PROBABILITY WITH USE OF LANE WIDTH

S208 — COMPUTE LANE CHANGE PROBABILITY WITH NO USE OF LANE WIDTH

S209 — LANE CHANGE DETERMINATION USES LANE WIDTH?
- YES
- NO → S211 — DETERMINE LANE CHANGE WITH NO USE OF LANE WIDTH

S210 — DETERMINE LANE CHANGE WITH USE OF LANE WIDTH

S212 — DETERMINE INTER-VEHICLE DISTANCE BETWEEN OWN VEHICLE AND SECOND VEHICLE/VEHICLE SPEED OF OWN VEHICLE

S213 — CONTROL OWN VEHICLE

( END )

EP 3 925 845 B1

# FIG. 3

START

ESTIMATE OWN VEHICLE POSITION — S301

DETECT OBJECT — S302

OBTAIN LANE STRUCTURE — S303

GENERATE MOVEMENT OPTIONS — S304

ANY LANE CHANGE MOVEMENT OPTION? — S305
NO / YES

LANE CHANGE PROBABILITY COMPUTATION USES POSITION OF SECOND VEHICLE? — S306
NO / YES

COMPUTE LANE CHANGE PROBABILITY WITH USE OF POSITION OF SECOND VEHICLE — S307

LANE CHANGE DETERMINATION USES POSITION OF SECOND VEHICLE? — S309
NO / YES

COMPUTE LANE CHANGE PROBABILITY WITH NO USE OF POSITION OF SECOND VEHICLE — S308

DETERMINE LANE CHANGE WITH NO USE OF POSITION OF SECOND VEHICLE — S311

DETERMINE LANE CHANGE WITH USE OF POSITION OF SECOND VEHICLE — S310

DETERMINE INTER-VEHICLE DISTANCE BETWEEN OWN VEHICLE AND SECOND VEHICLE/VEHICLE SPEED OF OWN VEHICLE — S312

CONTROL OWN VEHICLE — S313

END

EP 3 925 845 B1

## FIG. 4A

## FIG. 4B

## FIG. 5A

## FIG. 5B

FIG. 5C

FIG. 6A

FIG. 6B

FIG. 7A

FIG. 7B

# FIG. 7C

# FIG. 8

| | | LANE CHANGE PROBABILITY |
|---|---|---|
| PROXIMITY QUANTITY UP TO LANE BOUNDARY LINE [M] | 2.0 | 0 |
| | 1.0 | 0.5 |
| | 0 | 1.0 |
| ANGLE θ FORMED BETWEEN RUNNING DIRECTION AND LANE DIRECTION [°  ] | 0 | 0 |
| | 15 | 0.5 |
| | 30 | 1.0 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001199260 A

- US 2018043890 A1

**Non-patent literature cited in the description**

- **JULIAN SCHLECHTRIEMEN et al.** A Lane Change Detection Approach using Feature Ranking with Maximized Predictive Power. *IEEE Intelligent Vehicles Symposium (IV), June 8-11, 2014, Dearborn, Michigan, USA, Proceedings,* 08 June 2014, 108-114